# FASCICULE DE BREVET EUROPEEN

(11) **EP 4 588 136 B1**
(45) Date de publication et mention de la délivrance du brevet: **28.10.2026**
(21) Numéro de dépôt: 23793411.2
(22) Date de dépôt: 11.09.2023
(51) Int. Cl.: H01Q 1/22, G06F 1/16, G06F 21/64, G06F 21/72, G06F 21/74, G06F 21/78, H01Q 13/10, H01Q 21/29, H04L 9/00, H04L 9/08, G06F 21/44

(54) **ANTENNE À FENTE COMPRENANT UN INJECTEUR DE SIGNAL RADIOFRÉQUENCE À ÉLECTRODES ET DISPOSITIF COMPRENANT UNE TELLE ANTENNE**
SCHLITZANTENNE MIT EINEM HOCHFREQUENZSIGNALINJEKTOR MIT ELEKTRODEN UND VORRICHTUNG MIT SOLCH EINER ANTENNE
SLOT ANTENNA COMPRISING A RADIOFREQUENCY SIGNAL INJECTOR WITH ELECTRODES, AND DEVICE COMPRISING SUCH AN ANTENNA

(30) Priorité: 16.09.2022 FR 2209380; 16.09.2022 FR 2209381; 16.09.2022 FR 2209382; 16.09.2022 FR 2209384; 16.09.2022 FR 2209385
(43) Date de publication de la demande: 23.07.2025
(73) Titulaire: LEDGER, 75003 Paris (FR)
(72) Inventeur: FADELL, Anthony Michael, 75002 Paris (FR); LAUDER, Andrew David, Oxford Oxfordshire OX3 7PG (GB); TUPMAN, David John, Huntington Beach, California, California (US); DARNELL, Dean, Chapel Hill, North Carolina NC 27517 (US)
(74) Mandataire: Marchand, André
(86) Numéro de dépôt international: PCT/FR2023/051383
(87) Numéro de publication internationale: WO 2024/056970

(56) Documents cités:
- US-A1- 2009 153 407
- US-A1- 2019 190 115
- US-A1- 2020 265 418

## Description

### Domaine Technique

La présente invention concerne les portefeuilles matériels pour le stockage à froid de clés privées issues de la blockchain. La présente invention concerne également l'ergonomie des dispositifs électroniques portatifs, et notamment l'ergonomie de portefeuilles matériels de stockage à froid de clés privées.

### Arrière-plan

Ces dernières années, le développement des cryptomonnaies ou autres types de cryptoactifs gérés par la blockchain, tels que les jetons non fongibles («NFT») et les contrats intelligents («Smart Contracts»), a donné naissance à divers moyens de stockage et de conservation des clés privées attachées à ces différents types de cryptoactifs. C'est ainsi que sont apparues les notions de «portefeuille», de «stockage à froid» et de stockage «à chaud» de clés privées. Un «portefeuille», appelé aussi «porte-monnaie», est un appareil ou un programme dont la fonction est de gérer des cryptoactifs, et donc de stocker les clés privées qui y sont attachées. Les portefeuilles dits «chauds» («hot wallets») sont connectés à Internet et susceptibles d'attaques de pirates ou d'exposition à des virus et malwares. Il peut s'agir de portefeuilles gérés par des plateformes d'échange centralisé, qui n'offrent pas le plus haut niveau de sécurité. Ainsi, de nombreuses plateformes centralisées ont été pillées de centaines de millions de dollars par des pirates au fil des ans. Les portefeuilles «chauds» peuvent aussi prendre la forme de programmes installés sur des téléphones mobiles, tablettes ou ordinateurs personnels («software wallets»). De tels portefeuilles sont en permanence connectés à Internet et donc eux-mêmes susceptibles d'attaques.

Les portefeuilles froids («cold wallets») constituent la solution la plus sûre pour le stockage à froid («cold storage») de clés privées, c'est-à-dire hors de tout accès direct à Internet, ce qui réduit la surface d'attaque et donc le risque de vol par piratage informatique. Les transactions mettant en jeu des clés privées sont signées dans un environnement hors ligne. Toute transaction initiée en ligne est temporairement transférée vers le portefeuille matériel hors ligne, où elle est ensuite signée numériquement avant d'être transmise au réseau en ligne. Comme la clé privée n'est pas communiquée au serveur en ligne pendant le processus de signature, un pirate informatique ne peut pas y accéder.

La forme la plus simple de stockage à froid est le portefeuille papier. Un portefeuille papier est un document sur lequel sont inscrites des clés publiques et privées de l'utilisateur. Le document comporte généralement un code QR intégré qui peut ensuite être scanné pour signer une transaction. L'inconvénient de ce support est que si le portefeuille papier est perdu, illisible ou détruit, l'utilisateur ne peut plus accéder à ses fonds.

Les portefeuilles ou portes-monnaies matériels appelés «hardware wallets» constituent une alternative pratique aux portefeuilles papier pour stocker des clés privées. De plus, ils sont généralement configurés pour générer des phrases de récupération («recovery phrases») permettant de restaurer les clés privées s'ils sont perdus. Rappelons que les cryptoactifs ne sont jamais stockés dans un porte-monnaie matériel, mais se trouvent enregistrés sur la blockchain. Le porte-monnaie matériel ne fait que stocker des clés privées permettant de gérer les transactions sur la blockchain. Des clés publiques correspondant aux clés privées pointent vers une adresse sur la blockchain où se trouvent réellement les actifs.

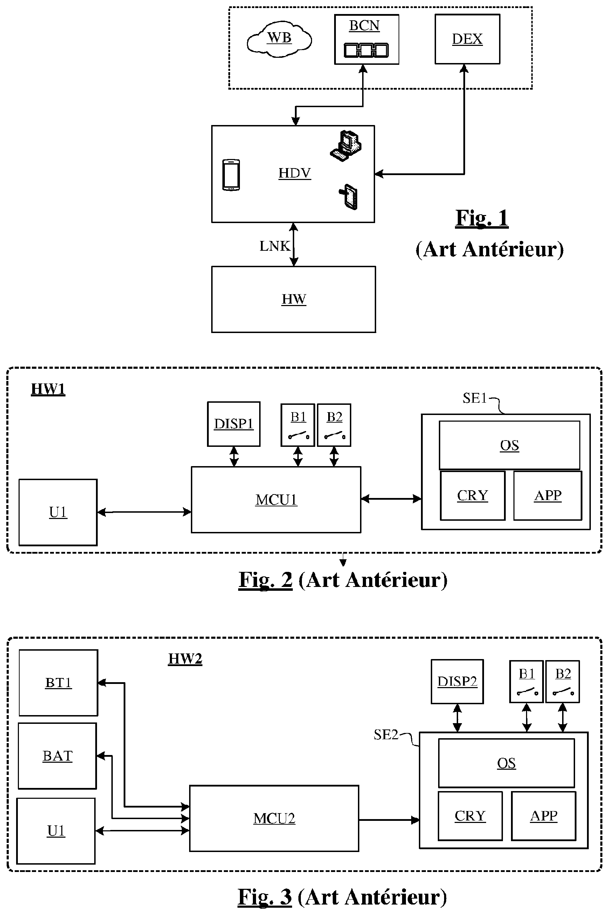

Comme montré sur la figure 1, un portefeuille matériel HW n'est jamais directement connecté à Internet. Pour être utilisable, le portefeuille matériel HW doit être relié à un dispositif hôte HDV au moyen d'une liaison de données LNK, par exemple USB ou Bluetooth. Le dispositif hôte HDV peut être un ordinateur, un téléphone mobile ou une tablette, et exécute un logiciel dit «compagnon» permettant de conduire des transactions sur la blockchain BCN, tel que le logiciel «Ledger live» développé par la demanderesse. Alternativement, le portefeuille matériel HW peut être utilisé, par l'intermédiaire du dispositif hôte HDV, avec des plateformes d'échange décentralisées ou «DEX», sur lesquelles l'utilisateur peut réaliser des transactions tout en conservant ses clés.

Les portefeuilles matériels HW commercialisés par la demanderesse ont connu un important succès commercial en raison du haut degré de sécurité qu'ils offrent, grâce à l'utilisation d'un élément sécurisé ou «secure element» pour conserver les clés privées et signer les transactions. Un élément sécurisé est une plateforme matérielle capable de stocker et de manipuler des données en conformité avec les règles et les exigences de sécurité fixées par une autorité de confiance. Il se présente sous la forme d'une puce de semiconducteur mettant en œuvre diverses contre-mesures visant à contrer des attaques de fraudeurs.

La figure 2 montre l'architecture d'un portefeuille matériel HW1 du type commercialisé par la demanderesse sous l'appellation «Nano S». Le portefeuille matériel HW1 comporte un élément sécurisé SE1 associé à un microcontrôleur MCU1. Le processeur MCU1 comporte une interface USB U1 et agit comme un dispositif proxy à l'égard de l'élément sécurisé SE1, pour la communication avec un dispositif hôte externe HDV exécutant une application compagnon (Cf. Fig. 1). L'élément sécurisé SE1 possède son propre système d'exploitation OS sécurisé (micrologiciel) lui permettant d'exécuter des programmes d'application APP, et intègre un coprocesseur cryptographique CRY. Le portefeuille matériel HW1 comporte également un afficheur DISP1 et deux boutons B1, B2.

L'afficheur DISP1 et les boutons B1, B2 sont gérés par le microcontrôleur MCU1. Ces deux boutons jouent un rôle important dans la sécurisation de certaines opérations : l'utilisateur doit appuyer en même temps sur les deux boutons afin de manifester son accord ou consentement pour la réalisation ou la finalisation de ces opérations.

La figure 3 illustre une deuxième architecture de portefeuille matériel HW2 du type commercialisé par la demanderesse sous l'appellation «Nano X», décrit plus en détail dans la notice d'information sur la sécurité «Ledger Nano X Security Target» publiée sur le site de l'Agence nationale de la sécurité des systèmes d'information (ANSSI).
(https://www.ssi.gouv.fr/uploads/2019/10/anssi-cible-cspn-2019_12en.pdf)

Le portefeuille matériel HW2 comporte, comme le portefeuille HW1, un élément sécurisé SE2, un microcontrôleur MCU2 équipé d'une interface USB U1, un écran DISP2 et deux boutons B1, B2. Il comporte en outre une batterie BAT rechargeable via l'interface USB et une interface de communication Bluetooth BT1 gérée par le microcontrôleur.

Comme précédemment, l'utilisateur doit appuyer en même temps sur les deux boutons afin de manifester son accord ou consentement lors la réalisation de certaines opérations sensibles, comme indiqué dans le document précité "Ledger Nano X Security Target", paragraphe 1.2 «Terminology», ligne «Consent» : "Le concept de sécurité du Ledger Nano X est renforcé par l'utilisateur final. Dès qu'une opération sensible est requise, l'utilisateur final doit confirmer l'opération à l'aide des deux boutons ".

A la différence du portefeuille matériel HW1, l'écran DISP2 et les boutons B1, B2 du portefeuille matériel HW2 sont gérés directement par l'élément sécurisé SE2, ce qui apporte un degré de sécurité supplémentaire en cas de corruption du microcontrôleur MCU2. Ainsi, les signaux reçus par l'élément sécurisé SE2, indiquant que l'utilisateur exerce en même temps une pression sur les deux boutons B1, B2, ne peuvent être falsifiés par le microcontrôleur. De même, les informations présentées à l'utilisateur par l'écran DISP2, par exemple le montant d'une transaction devant être validé par l'utilisateur, ne peuvent être falsifiées.

En résumé, dans un portefeuille matériel pour le stockage à froid de clés privées au sens de la présente demande, le microcontrôleur associé à l'élément sécurisé n'exécute aucun programme d'application et a pour seule fonction de gérer des périphériques de communication, USB, Bluetooth, etc. ainsi que d'autres périphériques (batterie, chargeur de batterie, etc.). Tous les programmes d'application sont exécutés par l'élément sécurisé.

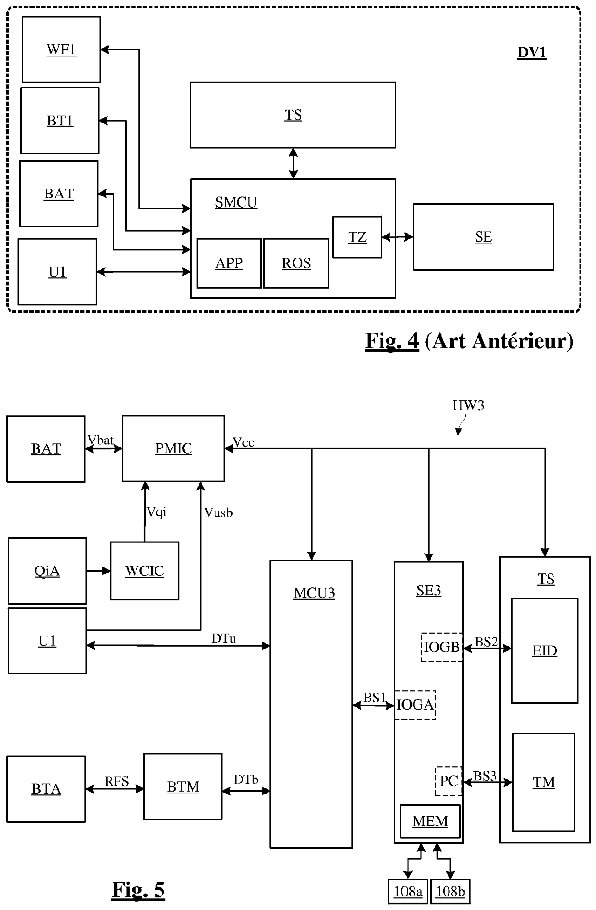

Il existe par ailleurs des dispositifs DV1 dont l'architecture classique est montrée sur la figure 4, qui comprennent un microcontrôleur SMCU incluant une zone de confiance **TZ** («Trust Zone»). La zone de confiance **TZ** peut dans certains cas être associée à un élément sécurisé SE auquel elle confie les opérations les plus sensibles ou le calcul cryptographique. La mise en œuvre d'une telle zone de confiance **TZ** se base généralement sur l'utilisation de deux processeurs virtuels associés à un contrôle d'accès matériel. Cela permet au cœur d'un programme d'application de basculer entre deux états, appelés «mondes», afin d'empêcher la fuite d'informations du monde le plus fiable vers le monde le moins fiable. Chaque monde peut fonctionner indépendamment de l'autre tout en utilisant le même noyau. La mémoire et les périphériques sont alors informés du monde d'exploitation du noyau et peuvent l'utiliser pour fournir un contrôle d'accès aux secrets et au code du dispositif. En général, le microcontrôleur SMCU exécute un système d'exploitation ROS dit «riche» dans le monde le moins fiable, et un code plus petit et spécialisé dans la sécurité dans le monde le plus fiable, afin de réduire la surface d'attaque. Le système d'exploitation riche est généralement Android.

Ce type de dispositif n'a pas besoin d'être relié à un dispositif hôte pour exécuter des opérations sur la blockchain, et contient généralement une interface de communication wifi WF1 en sus d'interfaces de communication USB U1 et Bluetooth BT1. Grâce à son système d'exploitation riche, il présente des fonctionnalités étendues et une ergonomie très avancée, et comporte notamment un écran tactile de grande taille comme ceux qui équipent les téléphones mobiles intelligents. Le dispositif DV1 peut d'ailleurs, dans certains cas, être équipé de circuits de téléphonie mobile et former un téléphone mobile à part entière équipé d'une fonctionnalité de stockage de clés privées.

Dans la pratique, et malgré les indéniables avantages ergonomiques qu'il offre, un tel dispositif DV1 n'est pas à l'abri d'une attaque et ne répond pas aux mêmes exigences rigoureuses de sécurité que les portefeuilles matériels pour le stockage à froid de clés privées, qui n'ont pas de connexion internet et dont le microcontrôleur n'exécute jamais des programmes d'application.

En contrepartie, les portefeuilles matériels pour le stockage à froid de clés privées n'offrent qu'une ergonomie médiocre, rendant certaines transactions peu aisées à conduire, en raison d'un afficheur de faible dimension et l'obligation de prévoir deux boutons pour valider certaines opérations sensibles.

Il pourrait donc être souhaité de perfectionner l'ergonomie des portefeuilles matériels, sans altérer le haut degré de sécurité qu'ils offrent.

Par ailleurs, certains détenteurs de cryptoactifs utilisent plusieurs portefeuilles matériels pour stocker des cryptoactifs de différentes natures ou de différentes valeurs. Un utilisateur peut par exemple utiliser un premier portefeuille matériel dédié à la gestion de comptes de cryptomonnaies de faible valeur pécuniaire, pour réaliser des transactions quotidiennes ou payer des achats, un deuxième portefeuille matériel dédié à la gestion de comptes de cryptomonnaies de forte valeur pécuniaire, un troisième portefeuille matériel dédié à la gestion de cryptoactifs de type jetons non fongibles, etc. Il pourrait donc également être souhaité de perfectionner l'ergonomie des portefeuilles matériels à l'attention d'utilisateurs qui en utilisent plusieurs.

Il pourrait plus généralement être souhaité de prévoir des perfectionnements applicables aux dispositifs électroniques portatifs et notamment aux portefeuilles matériels pour le stockage de clés privées, qui améliorent leur ergonomie, ou qui apportent de nouvelles fonctionnalités, ou encore qui améliorent leurs performances en termes de communication Bluetooth lorsqu'ils sont pourvus de tels moyens de communication.

Le document US 2019/0190115 A1 décrit une antenne à fente intégrée dans un dispositif sans fil compact comprenant des dissipateurs thermiques et des cartes de circuit. L'antenne à fente est formée entre les dissipateurs thermiques et inclut un dispositif d'alimentation d'antenne, la fente étant utilisée pour la ventilation au sein du boîtier. Une feuille conductrice est placée sur une extrémité de la fente pour le réglage de la fréquence. Un matériau diélectrique est disposé dans et sur une portion de la longueur de la fente, cette portion étant sélectionnée pour affiner la fréquence de résonance de l'antenne.

Le document US 2009/0153407 A1 divulgue des antennes hybrides pour dispositifs électroniques portables comportant des fentes d'antenne alimentées directement. Une fente d'antenne résonante est formée à partir d'une ouverture dans un élément de plan de masse. Une antenne à couplage par champ proche est couplée électromagnétiquement à l'élément d'antenne à fente résonante. Durant le fonctionnement, un câble coaxial ou une ligne de transmission dans le dispositif électronique portable peut alimenter directement l'élément d'antenne à fente résonante.

La document US 2020/0265418 A1 décrit un dispositif électronique et une méthode pour fournir un service de signature numérique de blockchain. Le dispositif comprend un circuit de communication, un affichage, une mémoire et au moins un processeur configuré pour opérer un système d'exploitation normal et un système d'exploitation sécurisé. La mémoire stocke des instructions permettant au processeur de recevoir un message de demande de signature via le circuit de communication dans le système d'exploitation normal, de transférer ce message vers le système d'exploitation sécurisé via un logiciel de gestion de blockchain.

### Résumé

Des modes de réalisation concernent un dispositif électronique comprenant un châssis en un matériau électriquement conducteur, comprenant une face avant, une face arrière et une paroi latérale, une antenne à fente fermée prévue pour émettre ou recevoir des données dans une bande de fréquences déterminée, pratiquée dans la paroi latérale du châssis et ayant un axe de rayonnement sensiblement perpendiculaire à la paroi latérale, et un circuit de communication sans fil configuré pour fournir un signal radiofréquence à l'antenne radiofréquence, l'antenne à fente fermée comprenant un orifice longitudinal pratiqué dans la paroi latérale du châssis et traversant celle-ci. Le dispositif comprend un injecteur de signal radiofréquence pour appliquer à une première surface de l'orifice longitudinal un potentiel de masse et appliquer le signal radiofréquence à une deuxième surface de l'orifice longitudinal. L'injecteur de signal comporte deux électrodes plates sensiblement parallèles, la première électrode étant en appui sur la première surface de l'orifice longitudinal et la deuxième électrode en appui sur la deuxième surface de l'orifice longitudinal, et une pièce de compression en un matériau souple et élastique, agencée entre les deux électrodes et exerçant sur celles-ci une force d'écartement qui plaque la première électrode contre la première surface de l'orifice longitudinal et plaque la deuxième électrode contre la deuxième surface de l'orifice longitudinal.

Selon un mode de réalisation, les deux électrodes plates ont une surface de contact avec les première et deuxième surfaces de l'orifice longitudinal qui est fonction de leur longueur, et présentent chacune une longueur qui est au moins égale au quart de la longueur desdites surfaces.

Selon un mode de réalisation, l'injecteur de signal radiofréquence comprend des conducteurs électriques et des composants électroniques reliant les première et deuxième électrodes.

Selon un mode de réalisation, la longueur de l'orifice longitudinal est proche du quart de la longueur d'onde d'un signal radiofréquence de fréquence 2,4 GHz, soit 30,6 mm à quelques millimètres ou dixièmes de millimètre près pour tenir compte de la présence de l'antenne parasite à fente ouverte.

Selon un mode de réalisation, le dispositif comprend également une antenne parasite à fente ouverte ayant un axe de rayonnement sensiblement perpendiculaire à l'axe de rayonnement de l'antenne à fente fermée, l'antenne parasite à fente ouverte comprenant un bras électriquement conducteur agencé parallèlement à l'orifice longitudinal et à proximité de celui-ci, le bras électriquement conducteur ayant une extrémité libre et une extrémité connectée électriquement à la paroi latérale du châssis.

Selon un mode de réalisation, l'extrémité connectée du bras est connectée électriquement à la paroi latérale du châssis à proximité d'une extrémité de la deuxième surface de l'orifice longitudinal recevant le signal radiofréquence.

Selon un mode de réalisation, une longueur et une hauteur de l'orifice longitudinal, une longueur du bras électriquement conducteur et une distance orthogonale entre le bras électriquement conducteur et la paroi latérale du châssis, sont des paramètres de configuration de l'antenne à fente fermée et de l'antenne parasite à fente ouverte, et dans lequel l'antenne à fente fermée et l'antenne parasite à fente ouverte forment une antenne résultante dont le gain dans la bande de fréquence déterminée est supérieur à -5 dB lorsque le châssis du dispositif est à l'air libre et reste supérieur à -5 dB lorsque la face arrière du châssis est en regard d'une surface électriquement conductrice.

Selon un mode de réalisation, l'antenne à fente fermée et l'antenne à parasite fente ouverte sont configurées de manière que lorsque la face arrière du châssis est en regard d'une surface électriquement conductrice, le rayonnement de l'antenne à fente fermée est prédominant sur le rayonnement de l'antenne parasite à fente ouverte.

Selon un mode de réalisation, le bras électriquement conducteur comporte, dans le prolongement de son extrémité connectée électriquement à la paroi latérale du châssis, une base fixée à la paroi latérale du châssis, et un contact en saillie venant en appui sur une surface de contact prévue dans la paroi latérale du châssis.

Selon un mode de réalisation, le bras électriquement conducteur est monté sous contrainte en flexion élastique entre sa base fixée à la paroi latérale du châssis et le contact en saillie en appui sur la surface de contact prévue dans la paroi latérale du châssis, la contrainte en flexion élastique exerçant une pression sur le contact en saillie en appui sur la surface de contact.

Selon un mode de réalisation, le bras électriquement conducteur est agencé dans une pièce de guidage en matière plastique assurant le parallélisme du bras relativement à la paroi latérale du châssis.

Selon un mode de réalisation, le châssis comporte sur sa face avant une plaque électriquement conductrice formant un premier écran au rayonnement émis par l'antenne parasite à fente ouverte, et dans lequel l'antenne à fente fermée et l'antenne à parasite fente ouverte sont configurées de manière que lorsque le châssis est à l'air libre, l'antenne parasite à fente ouverte présente une fréquence d'accord située dans la bande de fréquences déterminée tandis que l'antenne à fente fermée présente une fréquence d'accord située en dehors de la bande de fréquences déterminée, et lorsque la face arrière du châssis est en regard de la face avant d'un dispositif similaire ou d'une surface électriquement conductrice formant un deuxième écran au rayonnement émis par l'antenne parasite à fente ouverte, l'antenne à fente fermée présente une fréquence d'accord située dans la bande de fréquences déterminée tandis que l'antenne parasite à fente ouverte présente une fréquence d'accord située en dehors de la bande de fréquences déterminée.

Selon un mode de réalisation, le dispositif forme un portefeuille matériel pour le stockage à froid de clés de cryptographie issues de la blockchain et comprenant un microcontrôleur et un élément sécurisé.

Selon un mode de réalisation, le châssis est en un matériau non magnétique électriquement conducteur et comporte des aimants pour empiler magnétiquement le dispositif avec un dispositif similaire.

Selon un mode de réalisation, la bande de fréquences déterminée est la bande Bluetooth ou une bande Wifi.

### Description sommaire des dessins

Des exemples de réalisation de perfectionnements à des dispositifs portatifs seront décrits dans ce qui suit à titre non limitatif, en relation avec les figures jointes parmi lesquelles :
La figure 1 montre des exemples classiques d'utilisation d'un portefeuille matériel par l'intermédiaire d'un dispositif hôte,
La figure 2 montre une architecture classique de portefeuille matériel,
La figure 3 montre une autre architecture classique de portefeuille matériel,
La figure 4 montre une architecture classique de dispositif électronique offrant un degré moyen de sécurité,
La figure 5 montre une architecture perfectionnée de portefeuille matériel,
La figure 6 montre l'organisation d'une partie de la mémoire non volatile du portefeuille matériel de la figure 5,
La figure 7 montre des exemples d'utilisation du portefeuille matériel de la figure 5,
La figure 8 est un organigramme décrivant un procédé pour sécuriser certaines opérations lors de l'utilisation du portefeuille matériel de la figure 5,
La figure 9 montre un mode de réalisation du portefeuille matériel de la figure 5,
La figure 10 décrit des étapes de contrôle d'un composant montré sur la figure 9,
La figure 11 est une vue de dessus et en perspective d'un mode de réalisation du portefeuille matériel de la figure 5,
La figure 12 est une vue de dessous et en perspective du portefeuille matériel de la figure 11,
La figure 13 est une vue en coupe du portefeuille matériel de la figure 11, montrant certains éléments constitutifs,
La figure 14 est une autre vue en coupe du portefeuille matériel de la figure 11, montrant d'autres éléments constitutifs,
La figure 15 est une vue de dessus d'un afficheur du portefeuille matériel de la figure 11,
La figure 16 est une vue de dessus d'un module tactile du portefeuille matériel de la figure 11,
La figure 17 est une vue de dessus d'une lentille de protection du portefeuille matériel de la figure 11,
La figure 18 montre un capot du portefeuille matériel de la figure 11,
La figure 19 est une vue en coupe d'un portefeuille matériel empilable magnétiquement et comprenant des aimants,
La figure 20 est une vue de dessous du portefeuille matériel de la figure 19,
La figure 21 est une vue éclatée de dessous du portefeuille matériel de la figure 19,
La figure 22 est une représentation abstraite d'un agencement d'aimants dans le châssis d'un dispositif électronique portable,
La figure 23 montre les dimensions d'un aimant,
La figure 24 est une vue en coupe d'un empilement magnétique de portefeuilles matériels,
La figure 25 est une vue en coupe d'une variante d'un portefeuille matériel empilable magnétiquement,
La figure 26 est une vue en coupe d'une autre variante d'un portefeuille matériel empilable magnétiquement,
La figure 27 montre un empilement magnétique de portefeuilles matériels,
La figure 28 montre un exemple de menu affiché par un portefeuille matériel empilé avec d'autres portefeuilles matériels,
La figure 29 décrit des opérations exécutées par un portefeuille matériel empilé avec d'autres portefeuilles matériels,
La figure 30 est une vue en coupe d'un empilement de portefeuilles matériels équipés de capteurs,
La figure 31 décrit un procédé de gestion automatique d'un empilement de portefeuilles matériels,
La figure 32 montre un autre exemple de menu sur l'écran d'un portefeuille matériel empilé avec d'autres portefeuilles matériels,
La figure 33 décrit un procédé de gestion manuelle d'un empilement de portefeuilles matériels,
La figure 34 est une vue éclatée d'un portefeuille matériel comprenant une antenne,
La figure 35 est une vue de face du portefeuille matériel de la figure 34 et montre un élément d'antenne,
La figure 36 est une vue de dessus d'un autre élément d'antenne,
La figure 37 est une vue de dessous d'un autre élément d'antenne,
La figure 38 est une vue en coupe du portefeuille matériel de la figure 34,
La figure 39 est une vue en coupe et en perspective du portefeuille matériel de la figure 34,
La figure 40 est le schéma électrique de l'élément d'antenne des figures 36, 37,
La figure 41 est le schéma équivalent d'une partie de l'antenne du portefeuille matériel de la figure 34,
La figure 42 et la figure 43 sont des vues de dessous et en perspective du portefeuille matériel de la figure 34,
La figure 44 montre un élément d'antenne présent dans les figures 42, 43,
La figure 45 est le schéma équivalent d'une antenne présente dans le portefeuille matériel de la figure 34,
Les figures 46, 47 montrent une propriété de l'antenne de la figure 45 dans deux utilisations différentes,
La figure 48 montre un empilement de deux portefeuilles matériels,
La figure 49A, la figure 49B, la figure 50A et la figure 50B montrent d'autres propriétés de l'antenne de la figure 45 dans deux utilisations différentes.

### Description détaillée

On décrira dans ce qui suit des perfectionnements appliqués à des portefeuilles matériels pour le stockage à froid de clés privées. Certains perfectionnements sont susceptibles d'être mis en œuvre dans tous types de dispositifs électroniques portatifs, et ont donc un champ d'application allant bien au-delà de la seule réalisation de portefeuilles matériels.

### Exemple de réalisation d'un portefeuille matériel comprenant un écran tactile contrôlé par un élément sécurisé

Comme indiqué dans ce qui précède, un élément sécurisé est une plateforme matérielle mettant en œuvre diverses contre-mesures visant à contrer des attaques de fraudeurs. Schématiquement, il peut s'agir :
- d'attaques par inspection et/ou rétro-ingénierie (polissage, retrait de couches, imagerie thermique, rayons X, microscopie par balayage électronique),
- d'attaques par canaux auxiliaires (analyse de la consommation électrique, du rayonnement électromagnétique, du temps de calcul, ou tout autre grandeur physique mesurable corrélée à la valeur d'un secret que l'attaquant cherche à découvrir), ou encore
- d'attaques par injection de fautes au laser ou au moyen de pointes de test (notamment injection de signaux parasites ou «glitches» sur des lignes d'alimentation, des lignes d'horloge ou des bus de données).

Les contre-mesures prévues dans un élément sécurisé sont très nombreuses. Certaines sont logicielles et d'autres matérielles (code protégé contre des attaques, moyens de protection des mémoires volatiles et non volatiles, moyens de masquage de la consommation électrique, de masquage de données, moyens de masquage de la topographie du circuit intégré, capteurs de tension, de fréquence, de lumière, de température, permettant de détecter des attaques, etc.). En cas d'attaque, le système d'exploitation d'un élément sécurisé est conçu pour initier des actions défensives comme l'interruption d'un calcul en cours, le blocage définitif du circuit ou son autodestruction par effacement complet de sa mémoire.

En raison des nombreuses contre-mesures qu'ils mettent en œuvre, les éléments sécurisés sont complexes et coûteux à réaliser. Les fonctionnalités qu'ils offrent sont donc limitées, notamment en ce qui concerne le nombre d'entrées/sorties qu'ils offrent. De ce fait, les éléments sécurisés ne sont généralement pas utilisés pour contrôler des écrans, et lorsqu'ils le sont, comme dans le produit «NanoX» commercialisé par la demanderesse, c'est pour contrôler des écrans de petite taille sans aucune fonction tactile.

Ainsi, si l'on considère les éléments sécurisés disponibles sur le marché et notamment ceux qui offrent un niveau de sécurité au moins égal à 5 sur le Niveau d'Assurance d'Evaluation EAL («Evaluation Assurance Level»), correspondant au niveau E4 du système européen ITSEC (Information Technology Security Evaluation Criteria) et au niveau B2 du système américain TCSEC (Trusted Computer System Evaluation Criteria), il n'existe à ce jour à la connaissance de la demanderesse aucun élément sécurisé qui comporte plus de 10 entrées/sorties. En effet plus le nombre d'entrées/sorties est élevé, plus la surface d'attaque d'un élément sécurisé est importante.

Il sera noté ici que l'on entend par «entrées/sorties» des ports numériques 1 bit utilisables pour émettre ou recevoir des signaux logiques, ce nombre d'entrées/sorties étant inférieur au nombre de broches électriques (ou «pins») d'un l'élément sécurisé, lesquelles comportent en sus des broches d'entrées/sorties des broches d'alimentation électrique, de masse, éventuellement de remise à zéro, etc.

Dans le cadre du présent perfectionnement, il a toutefois été constaté qu'il pourrait être possible de gérer un écran tactile avec un élément sécurisé. En effet un élément sécurisé pourvu de 10 entrées/sorties peut gérer les liaisons séries suivantes :
1) une liaison ISO/IEC 7816, qui ne comporte que trois signaux logiques CLK (horloge), I/O (données) et RST («Reset» ou remise à zéro) ;
2) un bus SPI («Serial Peripheral Interface») qui n'utilise que 4 signaux :
   - SCLK «Serial Clock» ou Horloge Série (généré par le maître),
   - MOSI «Master Output, Slave Input», ou «Sortie Maître, Entrée Esclave» (généré par le maître),
   - MISO «Master Input, Slave Output» ou «Entrée Maître, Sortie Esclave» généré par l'esclave), et
   - SS «Slave Select», ou «Sélection Esclave» ;
3) un bus I2C («Inter Integrated Circuit Bus») qui ne comporte que deux signaux :
   - SDA (Serial Data Line) : ligne de données bidirectionnelle,
   - SCL (Serial Clock Line) : ligne d'horloge de synchronisation bidirectionnelle, soit un total de 9 entrées/sorties nécessaires.

Il a par ailleurs été constaté que certains types d'afficheurs et certains types de modules tactiles peuvent être commandés avec un bus SPI ou un bus I2C. Il est également possible de relier un élément sécurisé et un microcontrôleur via une liaison ISO/IEC 7816 pour carte à puce, ou encore une liaison SPI, I2C, USB, ainsi que d'autres.

Enfin, la gestion d'un écran tactile nécessite le traitement d'un signal d'interruption que l'écran tactile émet à chaque détection d'un événement tactile. Un tel signal d'interruption permet d'activer un sous-programme de gestion des événements tactiles. La réception d'un tel signal nécessite donc de mobiliser une autre entrée/sortie d'une élément sécurisé, soit 10 entrées/sorties au total. Dans le cadre du présent perfectionnement, il a donc été constaté que l'usage d'un élément sécurisé pour contrôler un écran tactile n'est pas impossible.

Ainsi, selon un premier perfectionnement, il est prévu un portefeuille matériel comprenant un écran tactile contrôlé exclusivement par un élément sécurisé, par l'intermédiaire d'une ou de plusieurs liaisons séries. Sous réserve de certaines précautions qui seront décrites plus loin, un tel écran tactile est à même d'améliorer considérablement le confort de l'interface utilisateur, tout en répondant aux exigences de sécurité applicables aux portefeuilles matériels. Selon le présent perfectionnement, l'écran tactile présente une diagonale supérieure ou égale à 3 pouces (soit 7,62 cm, un pouce étant égal à 2,54 cm), mais de préférence supérieure ou égale à 3,5 pouces (soit 8,89 cm), et comprend au moins 600 x 400 pixels. Dans un mode de réalisation, l'écran présente une diagonale de 3,9 pouces (9,906 cm) et offre 670 x 496 pixels.

### Exemple de mise en œuvre matérielle du portefeuille matériel

La figure 5 montre l'architecture générale d'un portefeuille matériel HW3 selon le présent perfectionnement. Le dispositif HW3 comprend un élément sécurisé SE3, un microcontrôleur MCU3 et un écran tactile TS («Touch Screen»). L'écran tactile TS comprend un afficheur à encre électronique EID («E-Ink Display») et un module tactile TM («Touch Module»). L'écran tactile TS est sous le contrôle exclusif de l'élément sécurisé SE3. A cet effet, les ressources en termes d'entrées/sorties de l'élément sécurisé SE3 sont réparties en trois groupes d'entrées/sorties IOGA, IOGB IOGC. Le groupe d'entrées/sorties IOGA est affecté à la mise en œuvre d'un bus BS1 reliant l'élément sécurisé SE3 au microcontrôleur MCU3. Le groupe d'entrées/sorties IOGB est affecté à la mise en œuvre d'un bus BS2 reliant l'élément sécurisé SE3 à l'afficheur EID, et le groupe d'entrées/sorties IOGC est affecté à la mise en œuvre d'un bus BS3 reliant l'élément sécurisé SE3 au module tactile TM. Le bus BS1 est par exemple un bus IEC/ISO 7816, le bus BS2 est par exemple un bus SPI et le bus BS3 un bus I2C. Un agencement inverse pourrait être prévu, avec un bus BS2 de type I2C et un bus BS3 de type SPI, ou un autre protocole de liaison série compatible avec les ressources de l'élément sécurisé. Le bus SPI est géré du côté de l'afficheur EID par une puce intégrée dans celui-ci, par exemple la puce UltraChip^{®} UC8177. Le bus I2C est géré du côté du module tactile TM par une puce intégrée dans celui-ci, par exemple la puce Goodix^{®} GT1151QM. L'élément sécurisé est par exemple une puce STMicroelectronics^{®} de la série ST33K1M et le microcontrôleur une puce STMicroelectronics^{®} de la série STM32.

Le dispositif HW3 comporte par ailleurs divers périphériques contrôlés par le microcontrôleur MCU3, par exemple :
- une batterie BAT ;
- un circuit intégré PMIC de gestion d'alimentation, par exemple la puce NXP PCA9420. Le circuit PMIC reçoit une tension Vat de la batterie lorsque celle-ci est chargée, fournit la tension Vat à la batterie lorsque celle-ci doit être chargée, et fournit une tension d'alimentation régulée Vcc au microcontrôleur MCU3, à l'élément sécurisé SE3 et à l'écran tactile TS ;
- une antenne QiA pour la charge de la batterie par induction conformément à la technologie Qi (https://www.wirelesspowerconsortium.com/qi/). L'antenne QiA est reliée à un circuit intégré de charge sans fil WCIC ("Wireless Charging Integrated Circuit") par exemple la puce EPIC^{®} 103AHQI01. Le circuit WCIC fournit une tension Vqi au circuit PMIC pour la charge de la batterie ;
- un port USB U1. Le port USB fournit au circuit PMIC une tension Vusb pour la charge de la batterie, fournit au microcontrôleur MCU3 des données DTu reçues d'un dispositif externe connecté au port USB, et transmet des données DTu au dispositif externe ;
- une antenne Bluetooth BTA, recevant un signal radiofréquence RFS fourni par un circuit BTM de gestion des communications Bluetooth. Bien que représenté sous la forme d'un bloc distinct du microcontrôleur MCU3, le circuit BTM peut être inclus dans le microcontrôleur MCU3. Le circuit BTM fournit des données DTb échangées avec un dispositif externe via une liaison Bluetooth ou transmet des données DTb au dispositif externe via la liaison Bluetooth.

Le dispositif HW3 présente donc l'avantage de posséder un écran tactile exclusivement contrôlé par l'élément sécurisé SE3 et donc non susceptible de corruption, y compris en cas d'attaque sur le microcontrôleur MCU3. Ce dernier n'exécute aucun programme d'application et ne stocke aucun des secrets cryptographiques utilisés par l'élément sécurisé. Il gère seulement les périphériques et opère comme un processeur proxy à l'égard de l'élément sécurisé, en lui transmettant les données DTb, DTu reçues par l'interface de communication choisie par l'utilisateur, ou en transmettant au dispositif externe des données DTb, DTu fournies par l'élément sécurisé. Le dispositif HW3 n'offre donc aucune possibilité de connexion directe à l'Internet et reste, malgré son écran tactile, un portefeuille matériel pour le stockage à froid de clés privées offrant un haut niveau de sécurité.

L'élément sécurisé SE3 comporte également un espace mémoire MEM comprenant une zone de mémoire morte (mémoire ROM), une zone mémoire non volatile programmable et effaçable électriquement (mémoire Flash) et une zone mémoire volatile (mémoire RAM). La zone mémoire non volatile programmable et effaçable électriquement reçoit un système d'exploitation OS3 de l'élément sécurisé. Celui-ci est configuré pour permettre d'usage, par des programmes d'application, de l'écran tactile TS.

### Exemple de mise en œuvre logicielle du portefeuille matériel

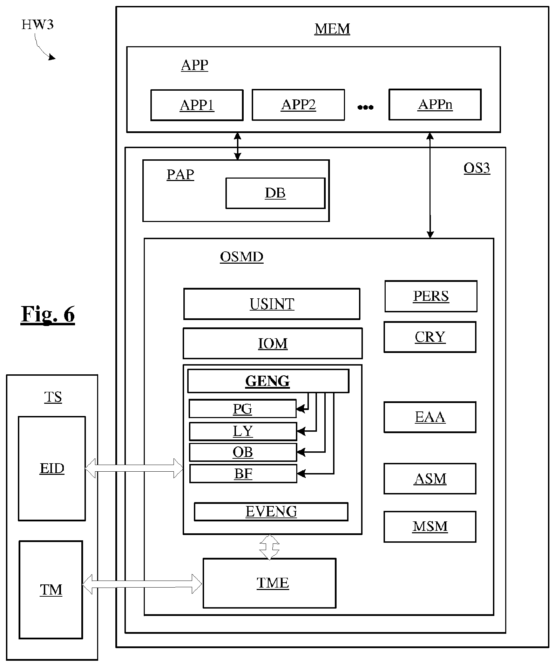

En relation avec l'exemple d'architecture matérielle qui vient d'être décrit, la figure 6 montre schématiquement un exemple d'organisation de la zone mémoire non volatile programmable et effaçable électriquement de l'espace mémoire MEM. L'espace mémoire MEM comprend une zone APP de stockage de programmes d'application APP1, APP2... APPn et une zone recevant le système d'exploitation OS3. Le système d'exploitation OS3 comprend une zone mémoire PAP («Privileged Applications») comprenant un tableau de bord DB («Dashboard») des programmes d'application privilégiés, et une zone mémoire OSMD («Operating System Modules») comprenant des modules de système d'exploitation. La zone mémoire OSMD comprend :
- un module USINT de gestion de l'interface utilisateur,
- un module PERS de personnalisation du dispositif,
- un module de cryptographie CRY associé à un coprocesseur de cryptographie intégré dans l'élément sécurisé, ou à des accélérateurs matériels pour les fonctions cryptographiques avancées,
- un module EAA d'approbation et d'attestation des programmes d'application («Endorsement and Application Attestation»)
- un module IOM de gestion des interfaces de communication («IO Management»)

La zone mémoire OSMD comporte également, selon le présent perfectionnement, un moteur graphique GENG («Graphic Engine») configuré pour gérer l'afficheur à encre électronique EID. Le moteur graphique GENG comprend :
- des pages préconfigurées PG,
- des formes préconfigurées LY («Layout»),
- des objets préconfigurés OB, et
- des formes de base BF.

L'accès par les programmes application à l'afficheur EID est donc sous le contrôle du système d'exploitation OS3 de l'élément sécurisé, qui vérifie préalablement l'authenticité et la légitimité des programmes avant de mettre le moteur graphique à leur disposition.

La zone mémoire OSMD comporte également, selon le présent perfectionnement, un moteur de gestion du module tactile TME («Touch Management Engine») qui fournit aux programmes d'application autorisés la possibilité d'avoir accès et d'interpréter les données émises par le module tactile TM.

Le moteur graphique GENG comprend également un moteur de gestion d'événement EVENG qui reçoit les informations tactiles fournies par le moteur tactile TME et recherche les corrélations avec des zones d'affichage, pour distinguer les appuis non significatifs de l'utilisateur sur l'écran et les appuis significatifs.

Dans un mode de réalisation permettant de préserver les ressources limitées de l'élément sécurisé en termes de mémoire vive (mémoire RAM), le moteur graphique GENG fonctionne sans allocation de mémoire vive. Les pixels d'image sont transférés dans une mémoire vive de l'afficheur sans relecture de ceux-ci. Dans un autre mode de réalisation qui peut être combiné avec le précédent, le moteur graphique GENG ne gère pas les pages préconfigurées PG, les formes préconfigurées LY («Layout») et les objets préconfigurés OB. Ainsi, le «travail» que doit réaliser le système d'exploitation est minimisé et est limité aux formes de base BF, celui-ci n'ayant pas besoin de créer dynamiquement des objets. La gestion des formes complexes est laissée à la charge des programmes application, dont le code est conçu avec des éléments graphiques préconfigurés minimisant les opérations que doit exécuter le moteur graphique.

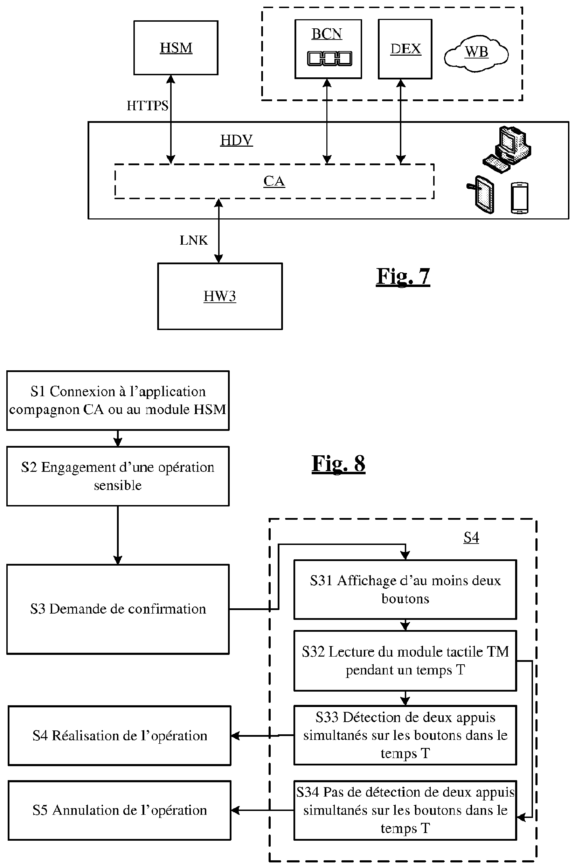

La figure 7 illustre des exemples d'utilisation du portefeuille matériel HW3. Celui-ci ne pouvant pas se connecter directement à l'Internet, une connexion doit être établie avec un dispositif hôte HDV connecté à l'Internet («WB») et exécutant une application compagnon CA, par exemple l'application «Ledger Live» (https://www.ledger.com/fr/ledger-live). Le dispositif HW3 peut alors interagir avec le logiciel compagnon pour réaliser des transactions sur la blockchain BCN ou sur des sites d'échange décentralisé DEX.

La gestion du portefeuille matériel HW3 est par ailleurs assurée par une boîte noire transactionnelle HSM («Hardware Security Module») située dans un datacenter, à laquelle le portefeuille matériel HW3 se connecte via une liaison sécurisée HTTPS. La boîte noire transactionnelle ne stocke aucune clé privée et assure seulement le contrôle de l'authenticité du dispositif, sa mise en service, la mise à jour de son système d'exploitation, le téléchargement de programmes d'application certifiés, etc.

### Mode de réalisation comprenant une validation d'opérations sensibles au moyen de deux boutons virtuels

Bien que l'usage sécurisé d'un écran tactile exclusivement contrôlé par l'élément sécurisé offre des avantages ergonomiques certains, l'abandon des deux boutons classiques dont l'appui simultané permet de sécuriser certaines opérations sensibles pourrait s'avérer nuisible à la sécurité du dispositif.

Ainsi, dans un mode de réalisation, le système d'exploitation est configuré pour émuler, au moyen de l'écran tactile, les deux boutons matériels de l'art antérieur. La figure 8 illustre à titre d'exemple l'exécution d'une opération sensible dans laquelle l'approbation de l'utilisateur doit être sécurisée :
- à une étape S1, le dispositif HW3 se connecte à l'application compagnon CA ou au module HSM selon le type d'opération à effectuer, par exemple effectuer une transaction ou afficher une phrase de récupération, par l'intermédiaire de l'application compagnon CA, activer et configurer le dispositif, ou télécharger un programme d'application par l'intermédiaire du HSM, etc.
- à une étape S2, le dispositif HW3 engage la réalisation de l'opération sensible,
- à une étape S3, le dispositif HW3 affiche sur l'afficheur EID une demande de confirmation, par l'utilisateur, que l'opération sensible doit être réalisée, et se place en attente de confirmation.

L'attente de confirmation comprend une étape S31 où le dispositif HW3 affiche au moins deux boutons virtuels sur l'afficheur EID, de préférence éloignés l'un de l'autre. Les boutons peuvent présenter un graphisme quelconque ou de fantaisie au choix du concepteur. Cette étape est suivie d'une étape d'attente S32 où le dispositif HW3 lit en boucle, pendant un temps T, les informations fournies par le module tactile TM. Si avant l'expiration du temps T le dispositif HW3 détecte, à une étape S33, deux appuis simultanés de l'utilisateur sur les deux boutons, le dispositif réalise alors (ou finalise) l'opération à une étape S4. Si à l'expiration du temps T le dispositif HW3 constate, à une étape S34, que l'utilisateur n'a pas validé l'opération, le dispositif annule l'opération à une étape S5.

### Exemple de réalisation du portefeuille matériel avec certains types d'organes périphériques imposant des contraintes spécifiques

Comme on l'a indiqué plus haut, les éléments sécurisés certifiés disponibles sur le marché n'offrent qu'un faible nombre d'entrées/sorties, généralement un maximum de 10 entrées/sorties. En effet les éléments sécurisés sont généralement destinés à être agencés dans des cartes à puce ou dans des objets connectés à Internet pour sécuriser l'Internet des Objets, notamment dans le domaine des applications professionnelles. Un élément sécurisé n'ayant que 10 entrées/sorties n'est donc pas conçu pour piloter un écran tactile de grande taille (les autres broches électriques d'un élément sécurisé, comme des broches d'alimentation ou de masse, ne sont pas considérées comme des entrées/sorties comme indiqué plus haut).

Ainsi, dans ce qui précède, l'usage suivant des ressources de l'élément sécurisé a été proposé à titre d'exemple :
- deux entrées/sorties pour gérer le bus I2C relié au module tactile TM (signaux SDA, SCL),
- quatre entrées/sorties pour gérer le bus SPI de l'afficheur EID (SCLK, MOSI, MISO, SS),
- trois entrées/sorties pour gérer le bus ISO/IEC 7816 entre l'élément sécurisé et le microcontrôleur (I/O, CLK et RST).

En sus de ces 9 entrées/sorties, une entrée/sortie de l'élément sécurisé doit être réservée à la réception d'un signal d'interruption émis par le module tactile TM lorsqu'un événement tactile est détecté, pour envoyer l'élément sécurisé dans un sous-programme de traitement des événements tactiles. Dans ces conditions, les 10 entrées/sorties de l'élément sécurisé sont utilisées

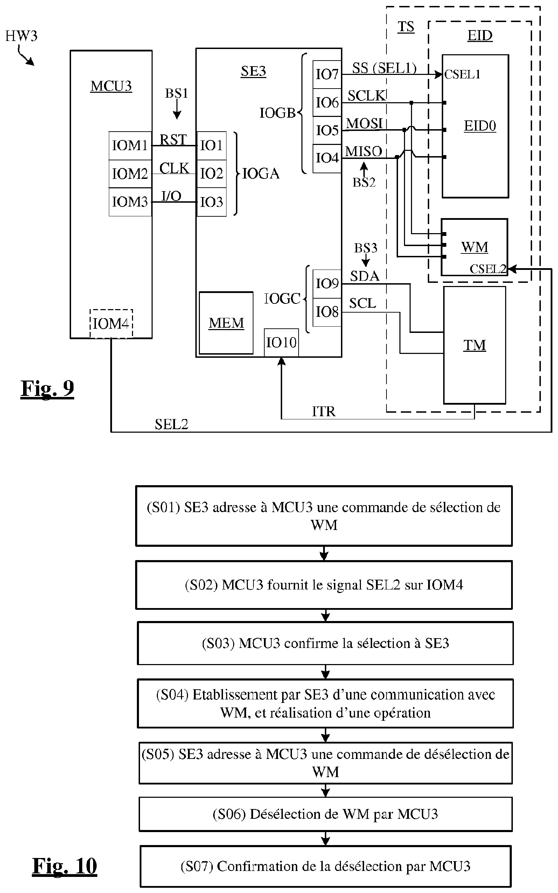

Toutefois, dans certains modes de réalisation, l'afficheur EID peut inclure un organe de configuration devant être configuré et qui n'est accessible que par l'intermédiaire d'une liaison série dédiée à ce composant. Comme montré sur la figure 9, l'afficheur EID peut par exemple comprendre un module d'affichage EID0 et un organe de configuration WM du module d'affichage EID0. L'organe de configuration WM est par exemple une mémoire non volatile programmable et effaçable électriquement recevant une bibliothèque de formes d'onde, qui est reliée au module d'affichage EID0 par une circuiterie interne à celui-ci. L'organe de configuration WM possède ses propres entrées/sorties qui sont compatibles avec un bus SPI.

Comme l'élément sécurisé SE3 doit avoir accès à l'organe de configuration WM pour y programmer ou y effacer des données, le bus BS2 est utilisé pour contrôler à la fois le module d'affichage EID0 et l'organe de configuration WM. Plus particulièrement, les fils du bus BS2 qui véhiculent les signaux SCLK, MOSI, et MISO sont connectés à la fois à des entrées/sorties du module d'affichage EID0 et à des entrées/sorties de l'organe de configuration WM. Le signal SS du bus BS2 est appliqué uniquement à une entrée de sélection CSEL1 («Chip Select») du module d'affichage EID0, à laquelle il applique un signal de sélection SEL1.

En résumé, l'affectation des entrées/sorties de l'élément sécurisé SE3 montrée sur la figure 9 est la suivante :
1) Bus BS1 (ISO/IEC 7816), groupes d'entrées/sorties IOGA :
   - une entrée/sortie IO1 de l'élément sécurisé SE3 est utilisée pour gérer le signal RST et est reliée à une entrée/sortie IOM1 du microcontrôleur MCU3,
   - une entrée/sortie IO2 de l'élément sécurisé SE3 est utilisée pour gérer le signal CLK et est reliée à une entrée/sortie IOM2 du microcontrôleur MCU3,
   - une entrée/sortie IO3 de l'élément sécurisé SE3 est utilisée pour gérer le signal RST et est reliée à une entrée/sortie IOM3 du microcontrôleur MCU3,
2) Bus BS2 (SPI), groupes d'entrées/sorties IOGB :
   - une entrée/sortie IO4 de l'élément sécurisé SE3 est utilisée pour gérer le signal MISO et est reliée à la fois à une entrée/sortie du module d'affichage EID0 et à une entrée/sortie de l'organe de configuration WM du module d'affichage EID0,
   - une entrée/sortie IO5 de l'élément sécurisé SE3 est utilisée pour gérer le signal MOSI et est reliée à la fois à une entrée/sortie du module d'affichage EID0 et à une entrée/sortie de l'organe de configuration WM du module d'affichage EID0,
   - une entrée/sortie IO6 de l'élément sécurisé SE3 est utilisée pour gérer le signal SCLK et est reliée à la fois à une entrée/sortie du module d'affichage EID0 et à une entrée/sortie de l'organe de configuration WM du module d'affichage EID0, et
   - une entrée/sortie IO7 de l'élément sécurisé SE3 est utilisée pour gérer le signal SEL1 et est reliée uniquement à l'entrée CSEL1 du module d'affichage EID0, auquel elle fournit le signal de sélection SEL1,
3) Bus BS3 (I2C), groupes d'entrées/sorties IOGC :
   - une entrée/sortie IO8 de l'élément sécurisé SE3 est utilisée pour gérer le signal SCL et est reliée à une entrée/sortie du module tactile TM, et
   - une entrée/sortie IO9 de l'élément sécurisé SE3 est utilisée pour gérer le signal SDA et est reliée à une entrée/sortie du module tactile TM,
4) Enfin, la dernière entrée/sortie IO10 de l'élément sécurisé SE3 est utilisée pour recevoir le signal d'interruption émis par le module tactile TM, désigné ici par la référence ITR.

L'organe de configuration WM et le module d'affichage EID0 étant tous deux connectés au même bus BS2, l'un doit être activé pendant que l'autre est désactivé, et réciproquement, sans quoi l'élément sécurisé ne peut pas communiquer avec l'un ou l'autre. A cet effet, l'organe de configuration WM comporte également une entrée de sélection CSEL2 («Chip Select») qui doit recevoir un signal de sélection SEL2.

Il apparaît donc dans ce cas que l'élément sécurisé SE3 n'a pas assez d'entrées/sorties pour générer le signal de sélection SEL2 devant être appliqué à l'entrée CSEL2 de l'organe de configuration WM.

Dans un mode de réalisation, un procédé est mis en œuvre pour pouvoir néanmoins commander l'écran tactile au moyen de l'élément sécurisé SE3. Selon ce procédé, l'entrée de sélection CSEL2 est contrôlée par une entrée/sortie IOM4 du microcontrôleur MCU3, qui fournit le signal de sélection SEL2. En effet, un microcontrôleur ne manque généralement pas d'entrées/sorties disponibles, contrairement à l'élément sécurisé. La valeur binaire du signal SEL2 fourni par l'entrée/sortie IOM4 du microcontrôleur est contrôlée par l'élément sécurisé SE3, qui envoie à cet effet des commandes au microcontrôleur par l'intermédiaire du bus BS1. Le microcontrôleur est configuré pour exécuter «servilement» ces commandes. De préférence, il ne comporte aucun programme d'application qui pourrait prendre le contrôle de l'entrée/sortie IOM4, autre que celui nécessaire à l'exécution des commandes envoyées par l'élément sécurisé.

Un exemple de procédé de contrôle de l'entrée CSEL2 de l'organe de configuration WM par l'élément sécurisé SE3, par l'intermédiaire du microcontrôleur MCU3, est décrit sur la figure 10.

A une étape S01, l'élément sécurisé SE3 adresse au microcontrôleur MCU3 une commande de sélection de l'organe de configuration WM. A une étape S02, le microcontrôleur exécute cette commande et applique à l'entrée CSEL2 le signal de sélection SEL2 de l'organe de configuration via son entrée/sortie IOM4. La valeur de ce signal peut être 0 (potentiel de masse) ou 1 selon les spécifications fournies par le fabricant de l'organe de configuration WM. A une étape S03, le microcontrôleur confirme à l'élément sécurisé que l'organe de configuration a été sélectionné. A une étape S04, l'élément sécurisé SE3 établit une communication avec l'organe de configuration WM au moyen du bus BS2, après avoir préalablement désactivé l'entrée CSEL1 du module d'affichage EID0 au moyen du signal SEL1. L'élément sécurisé réalise ensuite sur l'organe de configuration l'opération visée, par exemple l'effacement et/ou l'écriture de données s'il s'agit d'une mémoire non volatile. L'opération terminée, l'élément sécurisé envoie au microcontrôleur, à une étape S05, une commande de désélection de l'organe de configuration WM. A une étape S06, le microcontrôleur désélectionne l'organe de configuration WM, puis confirme cette désélection à l'élément sécurisé à une étape S07. Ce dernier peut alors rétablir une communication avec le module d'affichage EID0 au moyen du bus BS2, après l'avoir resélectionné via son entrée CSEL1 au moyen du signal SEL1.

Il apparaîtra clairement à l'homme de l'art que le procédé qui vient d'être décrit est susceptible de diverses variantes, notamment en ce qui concerne les confirmations d'exécution de commandes, qui pourraient être optionnelles, et le protocole de transfert de commandes entre l'élément sécurisé et le microcontrôleur.

Également, il apparaîtra clairement à l'homme de l'art que ce procédé peut être appliqué à divers autres organes périphériques. Dans un mode de réalisation, le bus BS2 est connecté à un troisième organe périphérique en sus du module d'affichage EID0 et de l'organe de configuration WM. L'élément sécurisé sélectionne/désélectionne ce troisième périphérique par l'intermédiaire d'une autre entrée/sortie du microcontrôleur, et peut communiquer avec ce périphérique au moyen du bus de données BS2, après avoir désélectionné le module d'affichage EID0 et l'organe de configuration.

Enfin, il apparaîtra clairement à l'homme de l'art que ce procédé est susceptible de diverses applications et n'est pas limité au contrôle d'un écran tactile. Il peut concerner toute structure de circuit combinant un microcontrôleur et un élément sécurisé, dans laquelle l'élément sécurisé contrôle un nombre d'organes périphériques supérieur au nombre d'organes périphériques qu'il pourrait contrôler s'il devait gérer toutes les entrées ou entrées/sorties de tels organes périphériques, et notamment leurs entrées de sélection.

### Exemple de réalisation d'un portefeuille matériel comprenant un écran tactile de grande taille avec affichage en bord de châssis

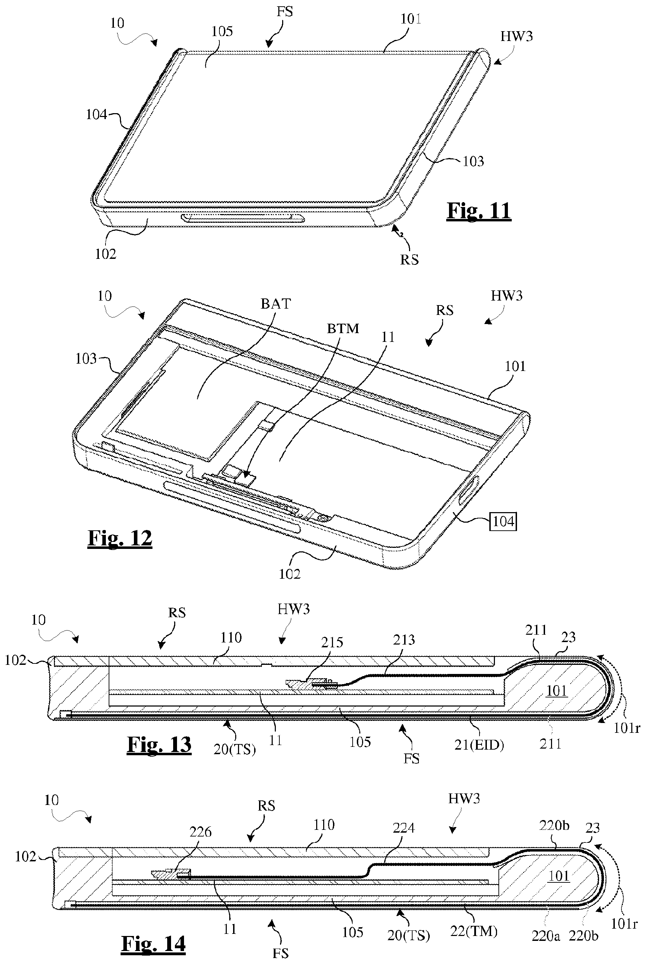

Les figures 11 et 12 montrent le châssis 10 d'un portefeuille matériel HW3 réalisé conformément à un deuxième perfectionnement. Le châssis du dispositif HW3 est vu depuis sa face avant FS sur la figure 11 et depuis sa face arrière RS sur la figure 12. Le châssis 10 est ici une pièce monobloc de forme rectangulaire réalisée en aluminium usiné ou moulé sous pression. Il comporte une première paroi latérale longitudinale 101, une deuxième paroi latérale longitudinale 102, une première paroi latérale transversale 103, une deuxième paroi latérale transversale 104, et une plaque 105 qui recouvre l'intégralité de sa face avant FS. A l'intérieur du châssis, on distingue la batterie BAT et un circuit imprimé 11 recevant divers composants du dispositif HW3 dont l'architecture a été décrite en relation avec la figure 5.

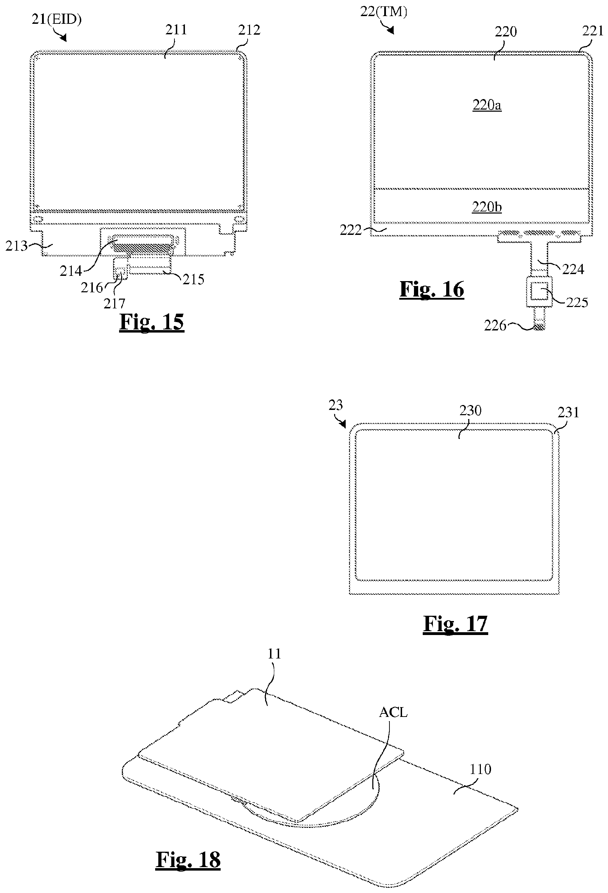

Les figures 13 et 14 sont des vues en coupe du dispositif HW3, face arrière RS du châssis orientée vers le haut. Le dispositif HW3 comprend un écran tactile 20, précédemment désigné TS, disposé sur la plaque avant 105 du châssis. L'écran tactile 20 est obtenu par assemblage d'un afficheur à encre électronique 21 (figure 15) précédemment désigné EID, recouvert par un module tactile 22 (figure 16) précédemment désigné TM, lui-même recouvert d'une lentille de protection 23 (figure 17).

L'afficheur 21 est représenté plus en détail sur la figure 15. Il comprend une zone active 211 ou zone d'affichage, un cadre peint 212, et est fabriqué sur un substrat souple 213 selon la technologie COP («chip on plastic»). L'afficheur est par exemple un écran électrophorétique à matrice active organique combinant les pilotes de source, les pilotes de grille et un contrôleur en circuit intégré collé directement sur le substrat de l'écran, par exemple le contrôleur UltraChip^{®} UC8177. L'écran offre 670 x 496 pixels avec un pas de pixel de 119 micromètres avec 16 niveaux de gris. Ses dimensions sont par exemple de 3,9 pouces (9,906 cm) pour une longueur totale de 77,4 mm et une largeur totale de 81,7 mm. Les dimensions de la zone active sont par exemple de 79,73 x 59,03 mm. Le substrat souple 213 s'étend au-delà de la zone active 211, et reçoit un multiplexeur de ligne et de colonnes 214. Il est prolongé par un connecteur 215 de bus SPI réalisé en un circuit imprimé flexible, permettant de connecter l'afficheur 21 au circuit imprimé 11 présent dans le châssis. Le connecteur comporte des composants auxiliaires 216 et une mémoire non volatile 217 recevant une bibliothèque de formes d'onde, correspondant par exemple à l'organe de configuration WM cité dans le mode de réalisation du dispositif HW3 de la figure 9.

Le module tactile 22 est représenté en détail sur la figure 15. Il comporte une surface de couverture 220 et un cadre peint 221, l'ensemble étant réalisé sur un support souple 222 de type FPC («Circuit Imprimé Flexible»). La surface de couverture 220 comprend une zone tactile 220a et une zone non tactile 220b. Le support souple 222 comporte une extension 224 recevant une puce 225 de contrôle du module, par exemple la puce Goodix^{®} GT1151QM. L'extrémité de l'extension 224 reçoit un connecteur 226 de bus I2C pour connecter le module tactile 22 au circuit imprimé 11 présent dans le châssis. Le module tactile présente par exemple une longueur totale de 65,7 mm et une largeur totale de 81,3 mm. La zone tactile 220a est par exemple d'une surface de 79,73 x 48,10 mm et la zone non tactile 220b s'étend de 34,0 au-delà de celle-ci.

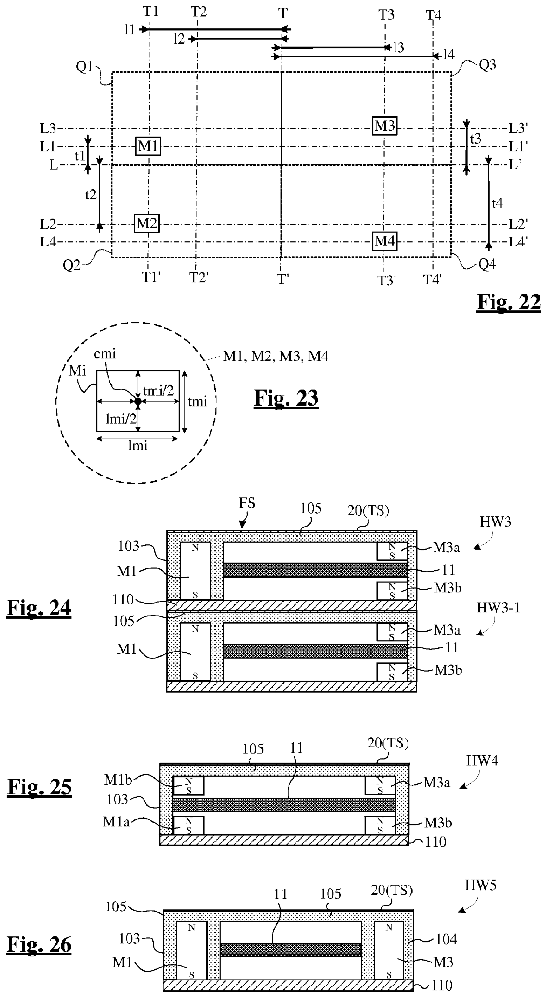

La lentille de protection 23 est montrée sur la figure 17. Elle comporte une zone transparente 230 et un cadre peint 231. La lentille présente par exemple une longueur totale de 67,9 mm et une largeur totale 83,7 mm. Elle comprend une couche de protection contre l'humidité, une couche dure antireflet et un adhésif optiquement clair sur sa face arrière pour l'assembler sur le module tactile 22. Dans un mode de réalisation, la lentille est conçue pour ne pas se rayer dans le cas d'un empilement du dispositif HW3 avec d'autres dispositifs similaires HW3-1, HW3-2, qui sera décrit plus loin (Fig. 24).

Sur les figures 13 et 14, il apparaît que la paroi latérale longitudinale 101 du châssis présente un bord externe 101r arrondi ayant une section sensiblement en demi-cercle, repéré par une flèche en trait pointillé. La paroi 101, en raison de son épaisseur, présente par ailleurs une partie plane dans le prolongement de la plaque 105, qui forme une partie de la face avant FS du châssis. Elle présente également, après le bord arrondi 101r, une partie plane qui forme une partie de la face arrière RS du châssis. Le reste de la face arrière du châssis est refermé par un capot 110. Il sera subsidiairement noté que dans un mode de réalisation du capot montré sur la figure 18, le capot 110 comporte une bobine d'antenne qui est connectée au circuit imprimé 11.

Selon le perfectionnement décrit ici, et comme on le voit sur la figure 13, la zone active 211 de l'afficheur 21 recouvre :
- la majeure partie de la plaque avant 105,
- la majeure partie de la partie plane de la paroi 101 qui prolonge la plaque 105 et forme une partie de la face avant du châssis,
- la majeure partie du bord arrondi 101r de la paroi 101, et, optionnellement,
- la partie plane de la paroi 101 qui forme une partie de la face arrière du châssis.

Le substrat souple 213 qui s'étend au-delà de la zone active 211 pénètre à l'intérieur du châssis pour permettre au connecteur 215 du bus SPI d'être fixé sur le circuit imprimé 11, cette partie du circuit étant cachée par le capot 110.

De même, sur la figure 14, le module tactile 22, qui recouvre l'afficheur 21 et est lui-même couvert par la lentille 23, s'étend sur :
- la majeure partie de la plaque avant 105,
- la majeure partie de la partie plane de la paroi 101 qui prolonge la plaque 105 et forme une partie de la face avant du châssis,
- la majeure partie du bord arrondi 101r de la paroi 101, et, optionnellement,
- la partie plane de la paroi 101 qui forme une partie de la face arrière du châssis.

Le terme «majeure partie» désigne par exemple au moins 90% de la surface concernée.

L'extension 224 du module tactile passe ensuite sous le capot 110 et pénètre à l'intérieur du châssis pour permettre au connecteur 226 de bus I2C d'être fixé sur le circuit imprimé 11.

De préférence, la zone tactile 220a du module 22 recouvre uniquement la plaque avant 105 et la partie plane de la paroi 101 qui prolonge la plaque 105 et forme une partie de la face avant du châssis, tandis que sa zone non tactile 220b recouvre le bord arrondi 101r et la partie plane de la paroi 101 qui forme une partie de la face arrière du châssis.

Ainsi, l'écran tactile TS permet à l'élément sécurisé :
- d'afficher des informations sur la face avant du châssis, et de collecter des informations tactiles,
- d'afficher des informations sur le bord arrondi 101r sans risque de collecter des informations tactiles involontaires, liées à la manipulation du châssis par l'utilisateur.

Le dispositif HW3, tout en répondant aux rigoureuses exigences de sécurité que nécessite sa fonction de portefeuille matériel, offre donc des avantages ergonomiques remarquables habituellement réservés aux dispositifs moyennement sécurisés dont l'écran n'est pas piloté par un élément sécurisé, opérant sous Android ou équivalent, avec en plus la possibilité d'afficher sur le bord du châssis des informations déterminées.

### Exemple de réalisation d'un portefeuille matériel comprenant des moyens d'empilement magnétique

Comme on l'a indiqué plus haut, certains détenteurs de cryptoactifs pourraient utiliser plusieurs portefeuilles matériels pour gérer des comptes de cryptoactifs de différentes natures ou de différentes valeurs, par exemple des comptes de faible valeur pécuniaire, des comptes de forte valeur pécuniaire, des comptes de jetons non fongibles ou de contrats intelligents, etc.

Selon un troisième perfectionnement pouvant ou non être combiné aux perfectionnements précédents, il est prévu un portefeuille matériel pouvant être empilé magnétiquement avec des portefeuilles matériels similaires.

Est plus particulièrement prévu un portefeuille matériel comprenant au moins quatre aimants agencés de manière à coopérer magnétiquement avec quatre aimants d'au moins un portefeuille matériel similaire, afin d'assurer l'empilement magnétique du portefeuille matériel avec le portefeuille matériel similaire, et ce quel que soit le portefeuille matériel qui se trouve au-dessus de l'autre.

Dans un mode de réalisation, les aimants sont agencés de manière dissymétrique de manière à former un détrompeur magnétique autorisant un empilement dans lequel les bords du châssis du portefeuille matériel sont alignés avec les mêmes bords du portefeuille matériel similaire, et dans lequel chaque aimant fait face à l'aimant correspondant du dispositif similaire.

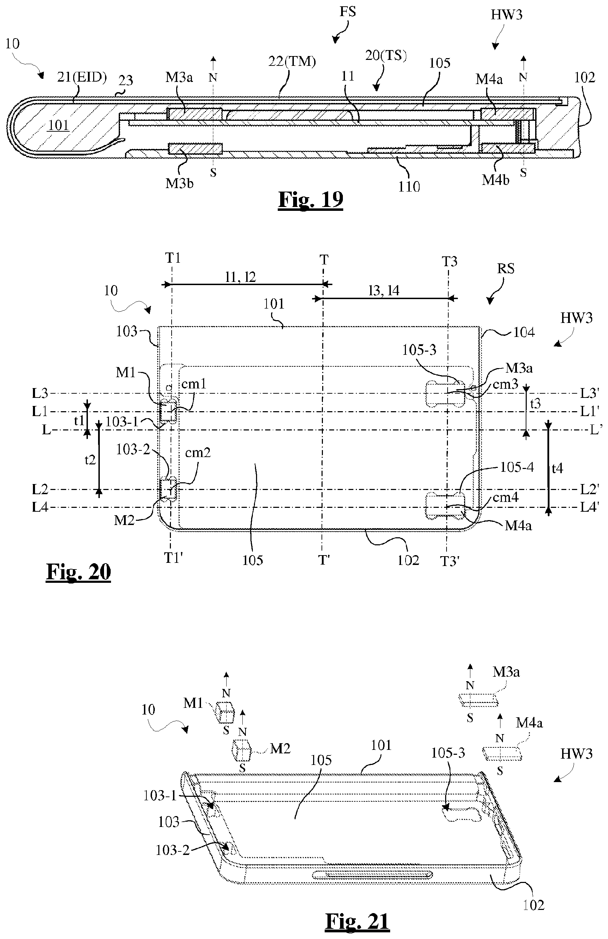

Les figures 19, 20, 21 montrent un dispositif HW3 selon ce mode de réalisation. La figure 19 est une vue en coupe transversale, la figure 20 est une vue de dessus et la figure 21 est une vue en perspective éclatée du dispositif HW3. Sur la figure 19, la face avant FS du châssis 10 est en haut. Sur les figures 20 et 21, le châssis est vu depuis sa face arrière RS.

Le châssis 10 est ici équipé de quatre aimants M1, M2, M3 et M4 ayant de préférence la même orientation magnétique, par exemple le Nord orienté vers la face avant du châssis. Les aimants M1, M2 sont agencés dans des logements 103-1, 103-2 pratiqués dans la paroi latérale transversale 103 du châssis, qui s'étendent sur sensiblement toute l'épaisseur du châssis. Les aimants M1, M2 génèrent donc un champ magnétique sur les deux faces du châssis.

Les aimants M3, M4 comprennent chacun deux aimants superposés M3a-M3b, et M4a-M4b, comme on le voit sur la figure 19. Les aimants M3a, M4a sont agencés dans des logements 105-3, 105-4 prévus dans la plaque avant 105 du châssis (Figs. 20, 21), tandis que les aimants M3b, M4b sont fixés sur le capot 110, en regard des logements 105-3, 105-4, dans des empreintes prévues à cet effet dans le capot. Les aimants M3a et M3b, M4a et M4b sont ici d'une épaisseur très inférieure à la moitié de l'épaisseur du châssis, et l'espace qui les sépare permet avantageusement le passage du circuit imprimé 11, comme on le voit sur la figure 19.

Dans ce qui suit, les aimants M3, M4 seront considérés comme étant monoblocs, à l'instar des aimants M1, M2, leur structure en deux aimants superposés ne modifiant pas le raisonnement exposé ci-dessous.

L'agencement des aimants M1, M2, M3, M4 est choisi ici de manière à former un détrompeur magnétique lors de l'empilement magnétique du dispositif HW3 avec un dispositif similaire HW3-1, tel que montré schématiquement sur la figure 24. L'agencement d'empilement visé est un agencement dans lequel les bords du châssis du dispositif HW3 sont alignés avec les mêmes bords du dispositif HW3-1, et dans lequel chaque aimant du dispositif HW3 fait face à l'aimant correspondant du dispositif similaire HW3-1. Cet agencement doit de préférence être unique, afin qu'il n'existe qu'une seule position d'empilement magnétique dans laquelle les dispositifs HW3, HW3-1 ont leurs bords respectifs alignés. En d'autres termes, lorsque les agencements d'empilement ne sont pas identiques (par exemple si les dispositifs sont agencés tête-bêche) les dispositifs ne devraient pas adhérer magnétiquement. L'agencement des aimants doit donc empêcher les dispositifs d'être mal positionnés, afin que les dispositifs ne s'attirent pas magnétiquement si cela est le cas.

A cet effet, et en référence aux figures 20, 22, on définit un axe central longitudinal L-L' du châssis, situé à mi-distance des bords latéraux longitudinaux 101, 102 du châssis, et un axe central transversal T-T' du châssis, situé à mi-distance des bords latéraux transversaux 103, 104 du châssis. Les axes L-L' et T-T' définissent quatre quadrants Q1, Q2, Q3, Q4 et chaque aimant est agencé dans l'un de ces quadrants. Les aimants M1, M2, M3, M4 sont agencés de manière dissymétrique relativement à l'axe central longitudinal L-L' ou relativement à l'axe central transversal T-T'. Une combinaison de ces deux dissymétries peut également être prévue, pour tout ou partie des aimants. Pour formaliser plus précisément cette dissymétrie, chaque aimant M1, M2, M3, M4 est défini comme ayant un point central cm1, cm2, cm3, cm4 (cmi), une dimension longitudinale Im1, lm2, lm3, lm4 (lmi) et une dimension transversale tm1, tm2, tm3, tm4 (tmi), comme montré sur la figure 23.

Par ailleurs, les axes et les distances suivants sont définis, comme montré sur les figures 20 et 22 :
- L1-L1' est un axe longitudinal passant un point central de l'aimant M1 et parallèle à l'axe central longitudinal L-L',
- t1 est la distance transversale entre les axes L1-L1' et L-L',
- L2-L2' est un axe longitudinal passant un point central de l'aimant M2 et parallèle à l'axe central longitudinal L-L',
- t2 est la distance transversale entre les axes L2-L2' et L-L',
- L3-L3' est un axe longitudinal passant un point central de l'aimant M3 et parallèle à l'axe central longitudinal L-L',
- t3 est la distance transversale entre les axes L3-L3' et L-L',
- L4-L4' est un axe longitudinal passant un point central de l'aimant M4 et parallèle à l'axe central longitudinal L-L',
- t4 est la distance transversale entre les axes L4-L4' et L-L',
- T1-T1' est un axe transversal passant un point central de l'aimant M1 et parallèle à l'axe central transversal T-T',
- l1 est la distance longitudinale entre les axes T1-T1' et T-T',
- T2-T2' est un axe transversal passant un point central de l'aimant M2 et parallèle à l'axe central transversal T-T',
- l2 est la distance longitudinale entre les axes T2-T2' et T-T',
- T3-T3' est un axe transversal passant un point central de l'aimant M3 et parallèle à l'axe central transversal T-T',
- l3 est la distance longitudinale entre les axes T3-T3' et T-T',
- T4-T4' est un axe transversal passant un point central de l'aimant M4 et parallèle à l'axe central transversal T-T', et
- l4 est la distance longitudinale entre les axes T4-T4' et T-T',
il peut être prévu, dans un mode de réalisation, qu'au moins deux aimants présentent des distances transversales t1-t4 ou longitudinales l1-l4 différentes.

Dans un mode de réalisation, l'une des règles de conception suivantes ou une combinaison d'au moins deux de ces règles est mise en œuvre :
- les distances transversales t1-t4 sont toutes différentes entre elles,
- les distances longitudinales l1-l4 sont toutes différentes entre elles,
- certaines distances transversales t1-t4 sont différentes et certaines distances longitudinales l1-l4 sont différentes.

Dans un autre mode de réalisation encore plus rigoureusement dissymétrique, l'une des règles suivantes est ajoutée à l'une des règles ci-dessus ou à une combinaison de ces règles :
- l'écart entre chaque distance transversale t1, t2, t3, t4 et chacune des autres distances transversales est au moins égal à la somme des moitiés des dimensions transversales tm1, tm2, tm3, tm4 des aimants correspondants, ou
- l'écart entre chaque distance longitudinale l1, l2, l3, l4 et chacune des autres distances longitudinales est au moins égal à la somme des moitiés des dimensions longitudinales lm1, lm2, lm3, lm4 des aimants correspondants,

Ou encore, en combinant les deux règles :
- l'écart entre certaines distances transversales t1, t2, t3, t4 est au moins égal à la somme des moitiés des dimensions transversales tm1, tm2, tm3, tm4 des aimants correspondants, et l'écart entre certaines distances longitudinales l1, l2, l3, l4 est au moins égal à la somme des moitiés des dimensions longitudinales lm1, lm2, lm3, lm4 des aimants correspondants.

Dans le mode de réalisation représenté sur la figure 20, le centre cm2 de l'aimant M2 est agencé sur l'axe transversal T1-T1' de l'aimant M1, et le centre cm4 l'aimant M4 (M4a, M4b) est agencé sur l'axe transversal T3-T3' de l'aimant M3 (M3a, M3b). Les distances longitudinales l1, l2 sont égales, ainsi que les distances longitudinales l3, l4, mais les distances longitudinales l1, l2 sont différentes des distances longitudinales l3, l4. Par ailleurs, les distances transversales t1, t2, t3, t4 sont toutes différentes, et les plus petits écarts entre les distances transversales, ici les écarts entre les distances t1 et t3 et entre les distances t2 et t4, sont sensiblement égaux à la somme des moitiés des dimensions transversales des aimants correspondants, soit M1, M3 d'une part et M2, M4 d'autre part. Le terme «sensiblement» est ici compris à quelques dixièmes de millimètres près.

Il apparaîtra clairement à l'homme de l'art que le perfectionnement qui vient d'être décrit est susceptible de diverses autres variantes et modes de réalisation. Notamment les aimants M1 et M2 peuvent eux-mêmes comprendre deux aimants superposés, comme illustré sur la figure 25 qui montre une variante HW4 du dispositif équipée d'un aimant M1 constitué d'une paire d'aimants M1a, M1b. Inversement, les aimants M3 et M4 peuvent être monoblocs et s'étendre sur toute l'épaisseur du châssis, comme illustré sur la figure 26 qui montre une variante HW5 du dispositif équipée d'un aimant M3 monobloc identique à l'aimant M1. De même, la fixation des aimants dans le châssis peut faire appel à divers autres moyens que ceux qui ont été décrits. Notamment, les aimants ou certains d'entre eux pourraient être directement fixés sur le circuit imprimé, si celui-ci est assez robuste pour résister à la force d'arrachement qui s'exerce sur chaque aimant lors de la séparation de deux châssis magnétiquement empilés. Enfin, bien que ce perfectionnement ne le nécessite pas, les polarités des aimants pourraient, dans certains modes de réalisation, ne pas être toutes identiques. Il apparaîtra également clairement à l'homme de l'art que le perfectionnement qui vient d'être décrit est susceptible d'être appliqué à tout type de dispositif électronique portatif que l'on souhaite empiler avec un dispositif similaire.

### Exemple de réalisation de dispositifs électroniques portatifs ayant une fonctionnalité d'empilement interactif

On a décrit dans ce qui précède des exemples de réalisation de dispositifs pouvant être empilés magnétiquement conformément au troisième perfectionnement. Selon un quatrième perfectionnement, des dispositifs empilés mettent en œuvre un procédé de gestion interactive d'empilement permettant de les utiliser lorsqu'ils sont présents dans une pile malgré le fait que leur écran en face avant n'est plus accessible.

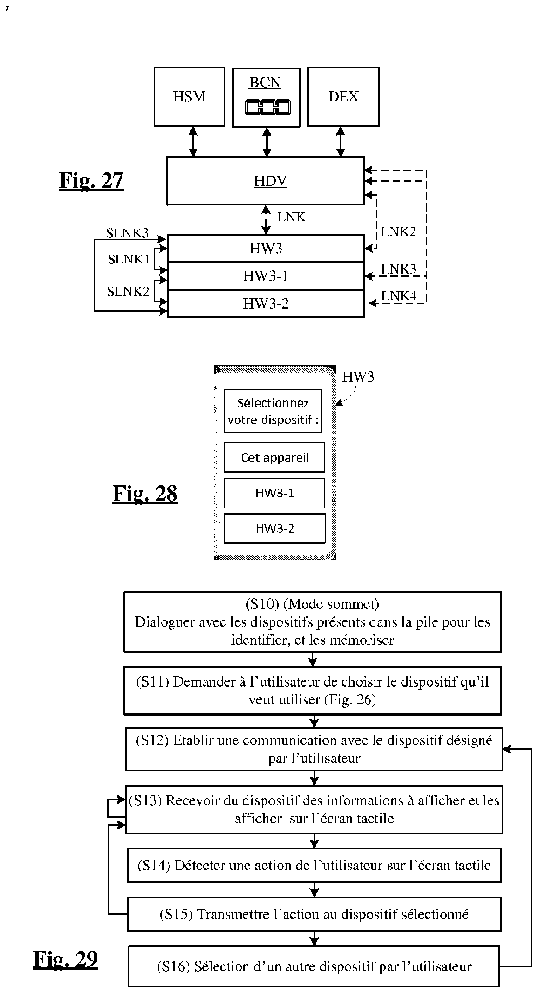

Un utilisateur peut par exemple posséder trois portefeuilles matériels HW3, HW3-1, HW3-2 et les empiler magnétiquement comme illustré sur la figure 27. L'utilisateur pourrait vouloir, sans défaire la pile, accéder à leur contenu ou vérifier leur état (charge de la batterie, portefeuilles de cryptoactifs, valeur d'une clé privée, etc.). L'utilisateur pourrait également vouloir utiliser l'un des dispositifs en le reliant à un dispositif hôte HDV pour réaliser une transaction sur la blockchain BCN ou sur un site d'échange décentralisé DEX, ou encore une opération de mise à jour ou de téléchargement d'un programme d'application via un module HSM.

Selon le présent perfectionnement, le dispositif au sommet de la pile met son écran à la disposition des autres dispositifs si l'utilisateur le demande. Cette «mise à disposition» signifie que l'utilisateur peut utiliser l'écran du dispositif au sommet de la pile pour consulter ou utiliser un dispositif présent dans la pile.

A cet effet, les dispositifs communiquent entre eux au moyen d'une liaison de données sans fil. Dans le cas d'un dispositif HW3 tel que décrit dans ce qui précède, cette liaison est par exemple une liaison Bluetooth multipoint, après appairage préalable des dispositifs, ainsi que, de préférence, leur appairage avec un dispositif hôte HDV.

L'organisation des échanges de données entre dispositifs empilés peut être faite selon une stratégie de communication maillée, chaînée, ou hiérarchisée. Dans une stratégie de communication maillée, chaque dispositif peut dialoguer avec l'un quelconque des autres dispositifs. Dans l'exemple représenté sur la figure 27, une telle stratégie fait intervenir des liaisons de données sans fil SLNK1, SLNK2, SLNK3 entre les dispositifs. Dans une stratégie de communication chaînée, chaque dispositif peut dialoguer avec le dispositif situé immédiatement au-dessous ou au-dessus de lui dans la pile. Dans l'exemple représenté sur la figure 27, une telle stratégie fait intervenir les liaisons de données sans fil SLNK1 et SLNK2. Dans une stratégie de communication hiérarchisée, le dispositif au sommet de la pile dialogue avec les dispositifs qui sont en dessous de lui, et deux dispositifs à l'intérieur de la pile ne communiquent pas entre eux. Dans ce cas, seules les liaisons SLNK1 et SLNK3 sont utilisées dans l'exemple de la figure 27.

Le présent perfectionnement étant applicable à tout type de dispositif portatif électronique comprenant des moyens de communication sans fil, notamment wifi, le choix d'une stratégie de communication pourra varier en fonction du type de liaison de données sans fil utilisé. Une stratégie de communication hiérarchisée peut par exemple être préférée dans le cas de liaisons Bluetooth. Une stratégie de communication maillée peut être préférée dans le cas de liaisons wifi.

Dans un mode de réalisation, le procédé d'empilement interactif selon le présent perfectionnement attribue à chaque dispositif dans la pile l'un des modes de fonctionnement suivants :
- un mode SM0, ou «Mode Empilé désactivé».
- un mode SM1, ou mode «Recouvert»
- un mode SM2, ou mode «Sommet».
- un mode SM3, ou mode «Entre deux».

Dans les modes SM1, SM2 SM3, le mode empilé est activé et chaque mode traduit la position du dispositif dans la pile et correspond à des affichages «F» et «E» déterminés :

| Mode | **Mode empilé** | **Emplacement** | **Affichage** |
|---|---|---|---|
| SM0 | Désactivé | Isolé | F0, E0 |
| SM1 | Activé | En bas de la pile | F1, E1 |
| SM2 | Activé | En haut de la pile | F2, E2 |
| SM3 | Activé | Entre deux dispositifs | F3, E3 |

Afin d'exploiter au mieux les possibilités d'affichage qu'offre l'écran tactile TS qui a été décrit dans ce qui précède, chaque mode se voit attribuer un affichage «F» en face avant (affichage «front») et un affichage «E» sur le bord du dispositif (affichage «Edge»). L'affichage «E» correspond, dans le mode de réalisation décrit plus haut, à un affichage d'information sur la zone non tactile de l'écran tactile TS couvrant le bord arrondi 101r du châssis. Un affichage «F» peut correspondre à un ou plusieurs menus différents, permettant de gérer la pile ou de gérer individuellement un des dispositifs qui compose la pile.

Le mode de fonctionnement SM0 correspond au mode de fonctionnement normal du dispositif HW3. Le dispositif HW3 dans le mode SM1 ou SM3 est couvert par un autre dispositif et ne pourrait donc pas être utilisé sans le procédé décrit ici. Le dispositif dans le mode SM2 est au sommet de la pile et peut être utilisé normalement puisque son écran est accessible à l'utilisateur, mais il peut également mettre son écran à la disposition des autres dispositifs si l'utilisateur le demande. La prévision du mode de fonctionnement SM3 peut n'être pas nécessaire, en fonction des besoins de gestion interactive de l'empilement. Notamment il peut ne pas être nécessaire de savoir quels sont les dispositifs en bas ou au milieu de la pile lorsque le dispositif dans le mode «sommet» s'adresse à chacun d'eux.

L'affichage F0 est l'affichage habituel présenté à l'utilisateur lorsqu'il utilise le dispositif avec le mode empilé désactivé. L'affichage F1 («recouvert») ou F3 («Entre deux») peut être quelconque puisque l'utilisateur ne voit pas l'écran du dispositif. Il peut s'agir d'une absence d'affichage, de l'affichage d'une image ou d'une information, par exemple «ce dispositif est dans le mode empilé». Mais il peut s'agir également de l'affichage d'une commande, par exemple «désactiver le mode empilé», ce qui peut être utile s'il advient que l'utilisateur rompt l'empilement sans avoir informé préalablement le dispositif au sommet de la pile qu'il souhaite désactiver le mode empilement, information que le dispositif transmettra alors aux autres dispositifs.

L'affichage F2 peut inclure l'affichage préalable d'un menu par lequel l'utilisateur choisit le dispositif qu'il veut commander au moyen de l'écran. Un exemple d'un tel menu est montré sur la figure 28. L'utilisateur est invité à choisir entre «cet appareil» ou l'un des deux autres dispositifs HW3-1, HW3-2. Si l'utilisateur choisit «cet appareil» l'affichage F2 bascule vers un affichage F0' qui est similaire à l'affichage F0 avec l'ajout d'une touche de retour pour permettre à l'utilisateur de faire un nouveau choix. Si l'utilisateur choisit «HW3-1» ou «HW3-2» l'affichage F2 bascule vers un affichage F0" qui est similaire à l'affichage F0 mais avec l'indication supplémentaire que l'appareil en cours d'utilisation n'est pas «cet appareil» mais celui qui a été sélectionné. Une touche de retour est également prévue pour permettre à l'utilisateur de faire un nouveau choix.

Ainsi, l'utilisation d'un dispositif situé dans la pile au moyen de l'écran du dispositif au sommet de la pile, peut être similaire à son utilisation lorsque le mode empilé est désactivé, les affichages F0' ou F0" pouvant inclure les mêmes menus que l'affichage F0. L'utilisateur peut par exemple choisir de connecter le dispositif à un dispositif hôte HDV au moyen d'une liaison de données LNK1, LNK2 ou LNK3, pour conduire une transaction, comme montré sur la figure 27.

Les affichages sur le bord E0 à E4 sont optionnels mais peuvent apporter un confort supplémentaire à l'utilisateur puisqu'ils sont visibles malgré le fait que les dispositifs soient empilés. Ces affichages peuvent être identiques ou différents. Ils peuvent par exemple consister dans l'affichage du nom de l'appareil ou de son numéro de série. Lorsqu'un dispositif dans le mode SM1 ou SM3 est sélectionné par le dispositif dans le mode SM2, l'affichage du nom de l'appareil ou de son numéro de série peut devenir clignotant ou défilant au lieu de rester fixe.

La figure 29 décrit des opérations conduites par le dispositif HW3 après avoir été placé dans le mode «sommet» SM2 (Fig. 27). A une étape S10, le dispositif HW3 interroge tous les dispositifs présents dans la pile pour les identifier. Il sera noté que pour des raisons de sécurité, la mise en œuvre de ces diverses liaisons de données nécessite de préférence des étapes préalables de configuration des dispositifs au cours desquelles chaque dispositif est informé des dispositifs avec lesquels il pourrait être empilé. Un dispositif n'ayant pas été préalablement déclaré par l'utilisateur ne sera donc pas admis dans une pile. De même, il peut être prévu que les dispositifs HW3, HW3-1, HW3-2 s'authentifient mutuellement de manière sécurisée en utilisant leurs moyens cryptographiques, avant d'accepter de communiquer entre eux.

A une étape S11, le dispositif HW3 présente la liste des dispositifs à l'utilisateur et lui demande de faire un choix, par exemple de la manière susmentionnée montrée sur la figure 28. A une étape S12, le dispositif HW3 établit une communication ou rétablit la communication avec le dispositif désigné par l'utilisateur. A une étape S13 le dispositif HW3 reçoit du dispositif sélectionné des informations à afficher et les affiche sur son écran tactile. A une étape S14 le dispositif HW3 détecte une action de l'utilisateur sur son écran tactile et la transmet, à une étape S15, au dispositif sélectionné. Ce processus peut se poursuivre indéfiniment tant que l'utilisateur utilise le dispositif sélectionné, jusqu'à une étape S16 où l'utilisateur revient au menu de choix (Fig. 28) pour sélectionner un autre dispositif ou pour demander que tous les dispositifs soient mis dans un mode veille.

La mise en œuvre de ce procédé de gestion interactive d'empilement suppose que chaque dispositif soit en mesure d'activer le mode empilement et sache où il se trouve dans la pile, pour se placer dans le mode SM1 ou SM2 correspondant, ou optionnellement dans le mode SM3. A cet effet, le procédé de gestion d'empilement peut être mis en œuvre automatiquement ou manuellement.

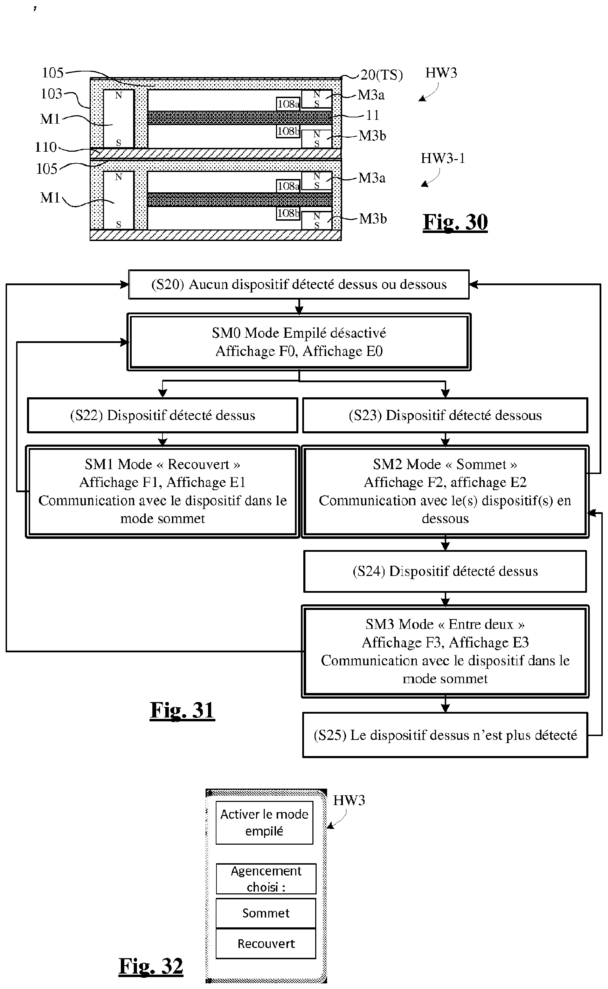

Dans le cadre d'une mise en œuvre automatique du procédé, chaque dispositif HW3, HW3-1, HW3-2 est équipé de capteurs 108a, 108b, comme illustré sur la figure 30. Ces capteurs permettent aux dispositifs de détecter la présence d'un autre dispositif au-dessous ou au-dessus d'eux. Si les dispositifs sont équipés d'aimants, les capteurs 108a, 108b peuvent être des capteurs à effet Hall, aptes à détecter la présence d'un aimant au-dessous ou au-dessus de chaque dispositif. Les capteurs 108a, 108b peuvent être directement reliés à l'élément sécurisé SE3 comme montré sur la figure 5, ou être reliés au microcontrôleur MCU3. Divers autres types de capteurs peuvent aussi être utilisés, comme des capteurs optiques, acoustiques, piézoélectriques, électromagnétiques, thermiques, capacitifs, etc., notamment si les dispositifs empilés ne comportent pas d'aimants.

Dans un mode de réalisation, il n'est pas indispensable que les capteurs permettent d'identifier avec certitude qu'un objet détecté sur ou sous un dispositif HW3, HW3-1, HW3-2 est un dispositif similaire apte à se placer dans le mode empilement. Cette indétermination peut être levée par le dispositif dans le mode «sommet» en fonction des réponses reçues à ses demandes d'identification. De même, un dispositif détectant un objet placé au-dessus de lui et ne recevant aucune demande d'identification comprendra que l'objet n'est pas un dispositif compatible.

La figure 31 est un diagramme d'états montrant un exemple de mise en œuvre automatique du procédé de gestion interactive d'empilement. Dans cet exemple, les quatre modes de fonctionnement SM0, SM1, SM2, SM3 sont gérés. Le dispositif HW3 est par défaut dans le mode SM0. A une étape S22, le dispositif détecte la présence d'un dispositif au-dessus de lui et bascule dans le mode SM1, où il attend d'être interrogé par le dispositif dans le mode «sommet». Comme autre possibilité, le dispositif détecte la présence d'un dispositif en dessous de lui à une étape S23 et bascule dans le mode «sommet» pour interroger et identifier les autres dispositifs présents dans la pile. Si le dispositif est dans le mode SM2 et détecte à une étape S24 qu'un dispositif a été placé au-dessus de lui, il bascule dans le mode SM3. Une fois dans le mode SM3, le dispositif revient au mode SM2 si, à une étape S25, le dispositif dessus n'est plus détecté. Enfin, quel que soit le mode SM1, SM2, SM3 dans lequel il se trouve, si le dispositif détecte à une étape S20 qu'il n'y a plus aucun dispositif au-dessus ou au-dessous de lui, il revient automatiquement au mode SM0.

Dans une mise en œuvre manuelle du procédé, l'utilisateur accède à un menu d'activation manuelle du mode empilement, dont un exemple est donné sur la figure 32. L'utilisateur active tout d'abord le mode empilé, puis choisit entre le mode «recouvert» SM1 et le mode «sommet» SM2. Dans cet exemple, le mode SM3 n'est pas géré.

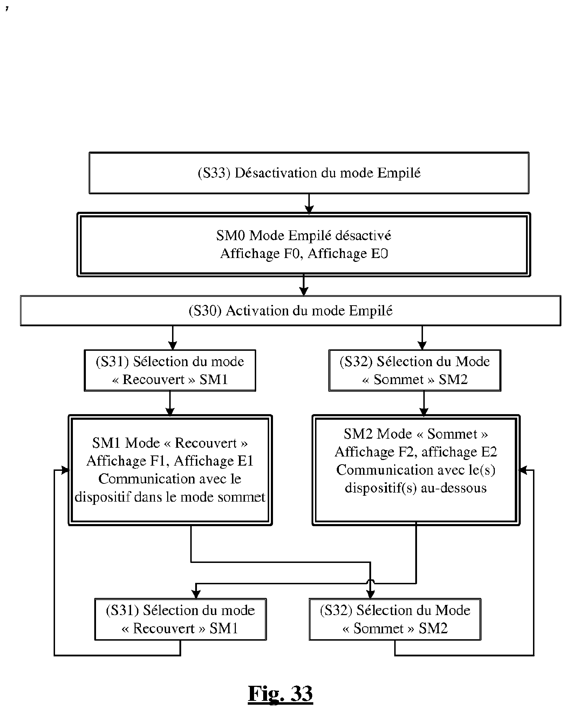

La figure 33 est un diagramme d'états montrant un exemple de mise en œuvre manuelle du procédé de gestion interactive d'empilement. Le dispositif HW3 est par défaut dans le mode SM0. A une étape S30, l'utilisateur active le mode empilé. A une étape S31, l'utilisateur choisit le SM1 ou bien choisit le mode SM2 à une étape S32. A tout instant, l'utilisateur peut revenir à l'étape S31 ou S32 pour changer le mode de fonctionnement du dispositif tout en modifiant sa position dans la pile. De même, à tout instant l'utilisateur peut, au cours d'une étape S33, désactiver le mode empilé.

Dans une application du procédé à des portefeuilles matériels du type décrit plus haut, la gestion des modes SM0, SM1, SM2, et optionnellement le mode SM3, est de préférence assurée par le système d'exploitation OS3 de l'élément sécurisé SE3. A cet effet il est prévu, dans le système d'exploitation, un module ASM de gestion automatique d'empilement («Automatic Stacking Management») comme montré sur la figure 6. Alternativement il est prévu, dans le système d'exploitation OS3, un module MSM de gestion manuelle d'empilement («Manual Stacking Management»). Dans certains modes de réalisation, les deux modules peuvent coexister, le choix entre une gestion automatique ou manuelle étant proposé à l'utilisateur. Chacun de ces modules permet au dispositif de se placer dans les différents modes de fonctionnement et de fonctionner comme ces modes l'exigent. Lorsque le mode de fonctionnement SM3 n'est pas géré, il est inclus dans le mode SM1, qui couvre le cas où le dispositif est en bas de la pile et le cas où il se trouve au milieu de la pile.

Il apparaîtra clairement à l'homme de l'art que le procédé selon le présent perfectionnement est applicable à tout type de dispositif portatif électronique comprenant des moyens de communication sans fil, notamment wifi, et que son champ d'application n'est pas limité aux portefeuilles matériels pour le stockage à froid de clés privées. De même, le procédé n'est pas exclusivement lié à l'utilisation d'aimants pour empiler des dispositifs, un empilement pouvant être prévu sans que les dispositifs soient maintenus magnétiquement les uns contre les autres. Également, le procédé est applicable à des dispositifs n'ayant pas d'affichage en bord de châssis (affichage E) et ayant seulement un affichage en face avant (affichage F).

Dans des modes de réalisation, le procédé de gestion interactive d'empilement peut également faire intervenir le dispositif hôte HDV. Dans ce cas, le menu du logiciel compagnon comporte une option «gestion d'empilement» permettant à l'utilisateur de sélectionner le portefeuille matériel qu'il veut utiliser pour réaliser une transaction (Fig. 27). Le portefeuille matériel en haut de la pile est alors informé par le logiciel compagnon qu'il doit mettre son écran à la disposition du portefeuille matériel sélectionné via le dispositif hôte.

### Exemple de réalisation d'une antenne Bluetooth auto adaptative ayant deux axes de rayonnement, notamment pour dispositif empilable

On a décrit dans ce qui précède un portefeuille matériel équipé d'une antenne Bluetooth BTA (Fig. 5) et d'un écran tactile TS. On a décrit également un portefeuille matériel réalisé en un châssis aluminium et comportant une face avant revêtue d'une paroi 105 électriquement conductrice recevant l'écran tactile TS (Fig. 9). Enfin, on a décrit également un portefeuille matériel pouvant s'empiler magnétiquement avec un portefeuille matériel similaire (Fig. 27) et un procédé de gestion interactive d'un empilement de portefeuilles matériels grâce à une communication sans fil entre les portefeuilles matériels empilés, notamment via des liaisons Bluetooth.

Des essais réalisés par la demanderesse avec des antennes Bluetooth disponibles sur le marché sous forme de composants intégrés, ont montré que ce type de composant est inapproprié à l'obtention d'une communication Bluetooth de bonne qualité en raison de la masse métallique que comporte le châssis 10, notamment la paroi électriquement conductrice 105 qui couvre la face avant du châssis (Fig. 9). En usage normal (dispositif HW3 à l'air libre), cette masse métallique provoque une forte atténuation du gain de ces antennes classiques, en agissant comme un écran (dans le sens de bouclier ou blindage) à l'égard du champ électromagnétique qu'elles émettent. On obtient un gain faible, ne permettant pas d'établir une liaison Bluetooth stable.

La demanderesse a par ailleurs conduit des essais avec une antenne en F inversé de type IFA («Inverted-F Antenna»), un type d'antenne généralement utilisé dans les téléphones mobiles, l'antenne étant disposée à proximité des bords du châssis. On a obtenu un gain relativement faible en usage normal (dispositif HW3 non empilé et à l'air libre), mais n'empêchant pas une communication Bluetooth. Par contre, lorsque deux dispositifs HW3, HW3-1 sont empilés (par exemple figure 30), le dispositif situé en haut de la pile voit le gain de son antenne s'affaiblir ce qui peut conduire à une communication Bluetooth instable.

Il pourrait donc être souhaité de prévoir une structure d'antenne radiofréquence perfectionnée qui soit utilisable notamment mais non exclusivement dans un dispositif électronique portable comprenant un châssis électriquement conducteur, et qui offre des performances relativement stables dans deux conditions d'utilisation, comprenant d'une part une utilisation à l'air libre, et d'autre part une utilisation en présence d'une surface électriquement conductrice, par exemple lorsque le dispositif est empilé avec un dispositif similaire.

Selon un cinquième perfectionnement, il est prévu une antenne radiofréquence comprenant la combinaison d'une antenne à fente fermée réalisée dans une paroi latérale du châssis, ayant un axe de rayonnement sensiblement perpendiculaire à cette paroi, et d'une antenne parasite à fente ouverte ayant un axe de rayonnement perpendiculaire à l'axe de rayonnement de l'antenne à fente fermée. Les deux antennes sont configurées - c'est-à-dire ajustées - à l'aide d'outils informatiques de simulation de champ radiofréquence en tenant compte des deux conditions de fonctionnement précitées. On obtient une antenne résultante dont les performances sont sensiblement homogènes dans ces deux conditions de fonctionnement. Un exemple détaillé de réalisation d'une telle antenne sera décrit dans ce qui suit à titre non limitatif.

### Exemple de réalisation d'une antenne à fente fermée

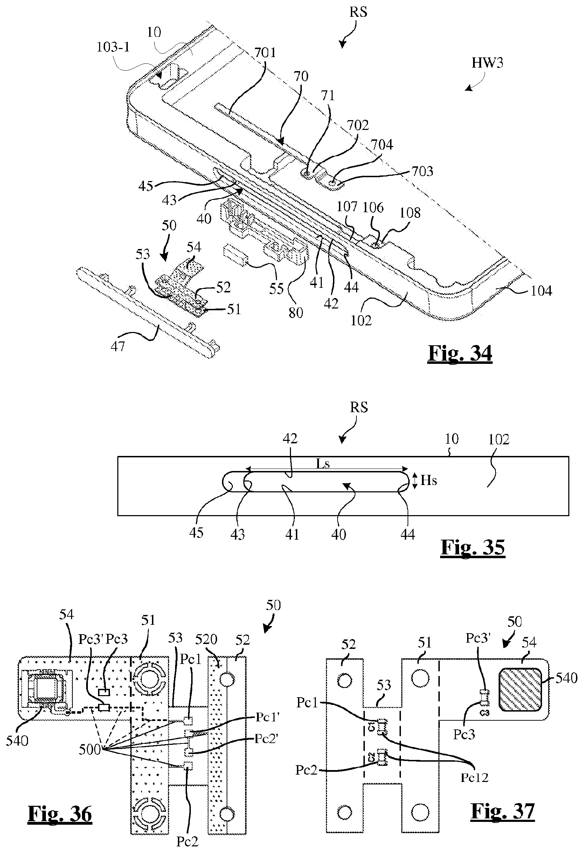

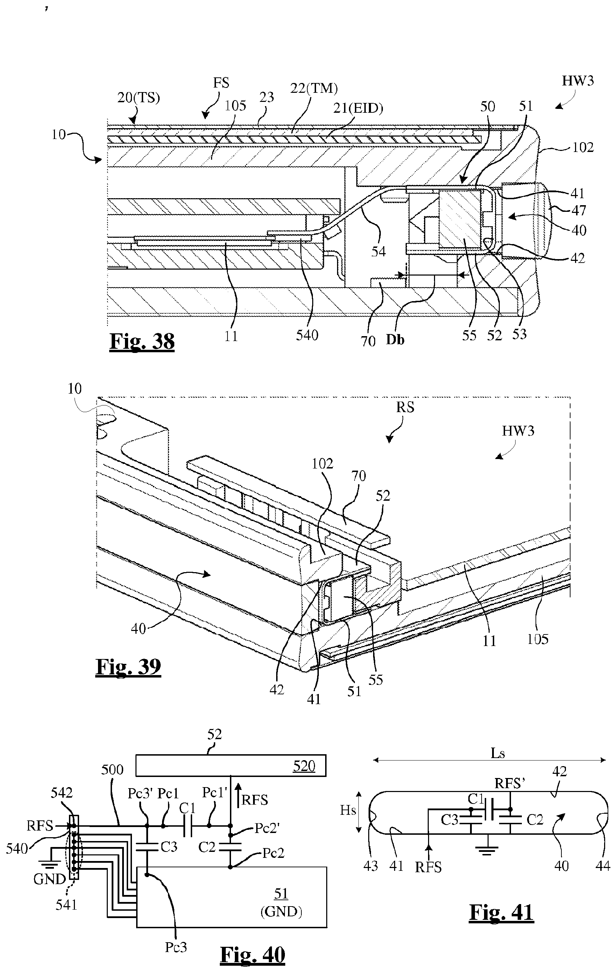

Les principaux composants d'un mode de réalisation d'une antenne à fente fermée sont montrés sur la vue éclatée de la figure 34. La structure de l'antenne après assemblage est montrée sur les figures 38, 39, 42, 43. Sur les figures 34, 39, 42, 43 le châssis 10 est vu en perspective depuis sa face arrière RS, la plaque 105 étant en bas. Sur la vue en coupe de la figure 38, la plaque 105 est en haut. De ce fait, les emplacements ou les orientations des composants sont inversés sur la figure 38 par rapport aux autres figures.

En référence à la figure 34, l'antenne à fente fermée comprend un orifice longitudinal 40 pratiqué dans une paroi du châssis, ici la paroi latérale longitudinale 102. L'antenne comprend également un injecteur 50 de signal radiofréquence, pour appliquer à l'orifice 40 un potentiel de masse et un signal radiofréquence RFS, ce signal étant fourni par le circuit BTM (Fig. 5) agencé sur le circuit imprimé (Fig. 12).

L'orifice longitudinal 40, vu de face sur la figure 35, comprend deux surfaces longitudinales 41, 42 se faisant face, reliées par deux surfaces latérales 44, 45, ici de forme sensiblement arrondie. Il présente une longueur Ls, ou longueur des surfaces longitudinales 41, 42, et une hauteur Hs. La paroi 102 présente également un renfoncement 45 qui ne la traverse pas et n'est pas considéré comme inclus dans l'orifice 40.

L'injecteur 50 est réalisé à partir d'un circuit imprimé souple et comporte deux électrodes 51, 52. L'électrode 51 est en appui sur la surface 41 de l'orifice 40 et l'électrode 52 est en appui sur la surface 42 de l'orifice. L'injecteur 50 comprend également une pièce de liaison 53 s'étendant entre les électrodes 51, 52, et une extension 54 dans le prolongement de l'électrode 51.

Les figures 36, 37 montrent l'injecteur 50 respectivement par une vue de dessus et une vue de dessous. La vue de dessus montre la face extérieure de l'injecteur qui est au contact des surfaces 41, 42. Avant son pliage, qui intervient lors de son insertion dans l'orifice 40, l'injecteur est une pièce plate comme on le voit sur ces figures. L'injecteur comprend divers conducteurs 500, certains étant en surface et d'autre enterrés. Il comprend également des plages de contact Pc1, Pc2, Pc3, Pc4, Pc5, Pc6 permettant de souder des composants, ici des condensateurs C1, C2, C3, qui participent à la configuration de l'antenne à fente fermée. Enfin, l'injecteur 50 comprend un connecteur 540 agencé sur l'extension 54, permettant de le connecter au circuit imprimé afin de recevoir le potentiel de masse et le signal radioélectrique RFS.

Lorsque l'injecteur 50 est agencé dans l'orifice 40, une pièce de compression 55 - ou écarteur - est insérée entre les électrodes 51, 52, comme on le voit par exemple sur la figure 38. La pièce de compression 55 est en un matériau souple tel un caoutchouc de silicone, et plaque les électrodes 51, 52 contre les surfaces 41, 42. Il sera noté que les électrodes 51, 52 ne couvrent ici que les bords des surfaces 41, 42, la partie extérieure de l'orifice 40 étant obstruée par un bouchon 47 non électriquement conducteur (Fig. 38). Les électrodes 51, 52 peuvent être recouvertes d'une couche d'or 520 pour assurer un bon contact électrique avec les surfaces 41, 42. Ces dernières peuvent par ailleurs être réalisées par fraisage pour offrir une bonne conductivité électrique, notamment si le châssis en aluminium a été préalablement anodisé.

Avantageusement, les électrodes 51,52 ont ici une large surface de contact avec les surfaces 41, 42, la longueur de la surface de contact étant au moins égale au quart de la longueur Ls des surfaces 41, 42. Elles sont de préférence insérées au milieu de l'orifice 40, de manière que leurs bords soient à la même distance des parois 44, 45 de l'orifice.

La figure 40 est le schéma électrique de l'injecteur. Le connecteur 540 comporte une pluralité de contacts de masse 541 reliés à l'électrode 51 qui forme un plan de masse (GND). II comporte également un contact 542 recevant le signal radiofréquence RFS. Le contact 542 est relié à la plage Pc3' par un conducteur 500. Le condensateur C3 a une première borne connectée à la plage Pc3' et une seconde borne connectée à la plage Pc3 qui est connectée à l'électrode 51. Le condensateur C1 a une première borne connectée à la plage Pc1' et une seconde borne connectée à la plage Pc1. Le condensateur C2 a une première borne connectée à la plage Pc2' et une seconde borne connectée à la plage Pc2, laquelle est connectée à l'électrode 51. Les conducteurs 500 relient la plage Pc1 à la plage Pc3', la plage Pc1' à la plage Pc2' ainsi qu'à l'électrode 520. Comme montré sur la figure 41, la surface 42 reçoit donc le signal radiofréquence RFS via le condensateur C3 dont la seconde borne est reliée à la surface 41 via le condensateur C3. La surface 41 est au potentiel de masse et est reliée à la surface 42 via le condensateur C2.

La configuration qui vient d'être décrite n'a qu'un caractère exemplatif et divers autres arrangements de composants et choix de composants participants à la configuration de l'antenne pourront être prévus par l'homme de l'art.

### Exemple de réalisation d'une antenne parasite à fente ouverte

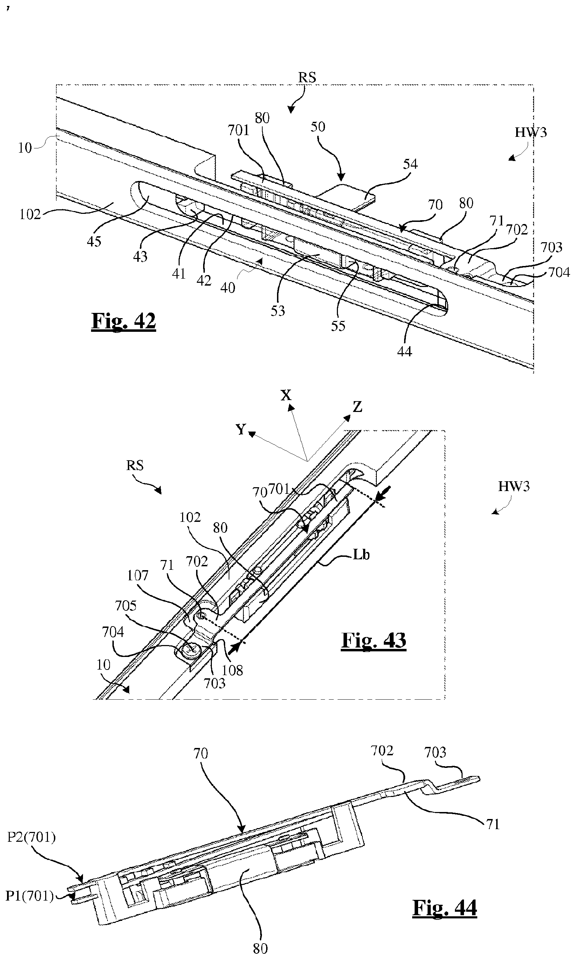

Les principaux composants d'un exemple de réalisation d'une antenne parasite à fente ouverte sont montrés sur la vue éclatée de la figure 34. La structure de l'antenne après assemblage est montrée sur les figures 42, 43. L'antenne parasite à fente ouverte comporte un bras 70 réalisé en un métal électriquement conducteur, par exemple de l'acier inoxydable ou un acier doux avec placage nickel. Le bras 70 présente une section rectangulaire de faible épaisseur pour être flexible, et une longueur Lb. Il s'étend le long de la paroi 102 du châssis, à une distance Db de l'ouverture 40 (Figs. 38), soit à une distance Db des bords intérieurs des surfaces 41, 42 de l'ouverture 40, dans un plan parallèle au plan de la surface 42 (Fig. 38) et proche de celui-ci.

Le bras 70 comporte une extrémité libre 701 et une extrémité 702 captive. L'extrémité 702 est plus large que le reste du bras et s'étend jusqu'à la paroi 102 où elle comporte un contact en saillie 71, obtenu par exemple par emboutissage, qui vient s'appuyer sur une surface de contact 107 pratiquée dans la paroi 102 (Fig. 43).

Le bras 70 comporte également, dans le prolongement de l'extrémité 702, une base 703 munie d'un trou 704. Une vis 705 qui traverse le trou 704 est vissée dans un orifice taraudé 106 (Fig. 34) pratiqué sur une surface d'accueil 108 prévue dans la paroi 102 (Figs. 34, 43).

Le bras 70 est fixé à la paroi 102 en exerçant sur celui-ci une contrainte en flexion élastique entre sa base 703, qui est vissée sur la surface d'accueil 108, et le contact en saillie 71, qui est en appui sur la surface de contact 107. Cette contrainte exerce sur le contact 71 une pression suffisante pour que le contact électrique entre le bras 70 et la surface 107 ne s'altère pas au fil du temps.

Le point de contact électrique du bras 70 avec la paroi 102, ici la surface de contact 107, est de préférence proche de la surface 42 qui reçoit le signal RF, pour que l'antenne parasite soit indirectement alimentée par le signal radiofréquence appliqué à l'antenne à fente fermée. Plus particulièrement, ce point est de préférence proche de l'extrémité de la surface 42. On voit ainsi sur la figure 42 que le contact en saillie 71 est ici proche de la surface latérale 44 de l'orifice.

En référence à la figure 34 ou à la figure 43, l'antenne parasite à fente ouverte comporte également une pièce 80 comprenant des parois de guidage du bras 70 afin d'assurer son parallélisme relativement à la paroi 102. La pièce de guidage 80 est également montrée sur la figure 44. L'extrémité libre 701 du bras 70 y est montrée dans deux positions : une position relâchée P1(701) avant montage dans le châssis, et une position P2(701) soumise à la contrainte en flexion élastique mentionnée plus haut, où le contact en saillie 71 en appui sur la surface 107 force le bras à occuper une position horizontale.

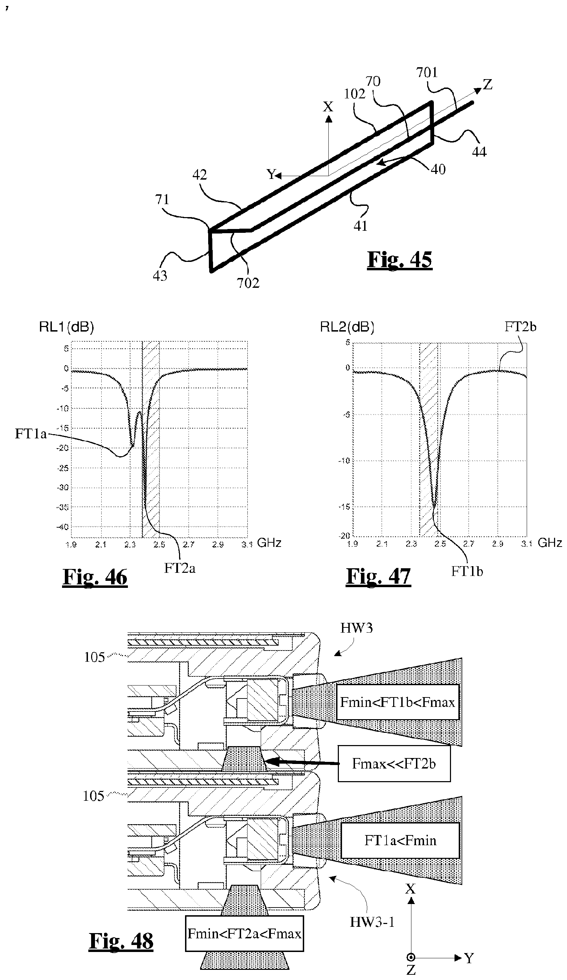

La figure 45 est un schéma de principe qui montre l'antenne résultant de la combinaison de l'antenne à fente fermée et de l'antenne parasite à fente ouverte. L'antenne à fente fermée comprend les surfaces 41 et 42 de l'orifice 40, reliées par les parois 43, 44. L'antenne parasite à fente ouverte comprend le bras 70 relié à la paroi 102 par le contact en saillie 71 prévu sur l'extrémité captive 702. L'antenne à fente fermée présente un axe de rayonnement Y sensiblement perpendiculaire à la paroi latérale 102 du châssis, tandis que l'antenne parasite à fente ouverte présente un axe de rayonnement X sensiblement perpendiculaire à l'axe de rayonnement Y, donc parallèle à la paroi latérale 102 et perpendiculaire au plan du châssis 10.

### Exemple de réglage et d'optimisation de l'antenne résultante

L'antenne à fente fermée et l'antenne parasite à fente ouverte forment ensemble une antenne résultante dont les paramètres de dimensionnement et d'accord doivent être déterminés par des simulations informatiques. A cet effet, il faut d'abord déterminer la bande de fréquences dans laquelle l'antenne va être utilisée. Il s'agira par exemple de la bande Bluetooth ou de la bande wifi de 2,45 GHz, avec des largeurs de canaux qui peuvent varier selon la technologie retenue.

Dans un mode de réalisation offrant des résultats qui seront décrits plus loin, ces simulations visent l'optimisation de l'antenne dans le cadre d'une communication Bluetooth, soit dans une bande de fréquences visée TFB comprises entre une fréquence Fmin de 2,4 GHz et une fréquence Fmax de 2,483 GHz, pour l'obtention d'au moins l'un des résultats suivants :
1) le gain de l'antenne résultante dans la bande de fréquences visée doit être supérieur à -5 dB lorsque le châssis 10 du dispositif HW3 est à l'air libre, et doit rester supérieur à -5 dB lorsque la face arrière du châssis est en regard d'une surface électriquement conductrice, notamment la plaque 105 du châssis d'un dispositif similaire HW3-1, HW3-2.
2) lorsque le châssis 10 est à l'air libre, l'antenne parasite à fente ouverte doit présenter une fréquence d'accord située dans la bande de fréquences visée,
   et
3) lorsque la face arrière du châssis 10 est en regard d'une surface métallique et notamment de la plaque avant 105 du châssis d'un dispositif similaire, l'antenne à fente fermée doit présenter une fréquence d'accord située dans la bande de fréquences visée.

En d'autres termes, selon les conditions de fonctionnement, le rayonnement de l'antenne à fente fermée sera prédominant sur celui de l'antenne parasite à fente ouverte ou vice-versa.

Parmi le grand nombre de paramètres permettant d'accorder l'antenne de manière à obtenir les résultats visés, les paramètres les plus importants comprennent notamment :
- la longueur Ls de l'orifice longitudinal 40, soit la longueur de l'antenne à fente fermée,
- la hauteur Hs de l'orifice longitudinal 40, soit l'ouverture de l'antenne à fente fermée,
- la longueur Lb du bras 70, soit la longueur de l'antenne parasite à fente ouverte,
- la distance Db précédemment décrite entre le bras 70 et l'ouverture 40, soit l'ouverture de l'antenne parasite à fente ouverte.

Comme point de départ des simulations, la longueur théorique de l'orifice longitudinal 40 est choisie égale au quart de la longueur d'onde d'une fréquence de 2,45 GHz soit 30,6 mm. Les essais et simulations conduisent à une valeur sensiblement différente à quelques millimètres ou dixièmes de millimètre près, en raison de la présence de l'antenne parasite à fente ouverte, pour l'obtention des objectifs mentionnés ci-dessus. Ainsi, au terme de simulations et d'essais, les valeurs suivantes ont par exemple été retenues :
- longueur Ls de l'orifice longitudinal 40 : 30 mm ;
- hauteur Hs de l'orifice longitudinal 40 : 2,1 mm ;
- longueur Lb du bras 70 : 22 mm ;
- distance Db : 1,6 mm.

Il apparaîtra clairement à l'homme de l'art que ces valeurs sont susceptibles de varier en fonction d'autres paramètres de l'antenne, par exemple les composants électroniques embarqués sur l'injecteur 50 (ici les condensateurs C1 à C3), la forme du châssis et l'emplacement de l'ouverture sur l'une de ses parois, la quantité de métal constituant le châssis, etc.

Les figures 46 et 47 montrent des courbes des pertes par réflexion ou pertes de retour («return loss») de l'antenne résultante, obtenues avec le dimensionnement qui vient d'être indiqué. La figure 46 montre la courbe des pertes par réflexion RL1 lorsque le dispositif HW3 est à l'air libre. La figure 47 montre la courbe des pertes par réflexion RL2 lorsque le dispositif HW3 est empilé sur un dispositif similaire HW3-1, comme montré sur la figure 48. Chaque courbe présente deux valeurs basses des pertes par réflexion, à des fréquences qui correspondent respectivement à la fréquence d'accord FT1 de l'antenne à fente fermée et à la fréquence d'accord FT2 de l'antenne parasite à fente ouverte. Plus particulièrement :
- FT1a (Fig. 46) est la fréquence d'accord de l'antenne à fente fermée lorsque le dispositif est à l'air libre ou lorsque le dispositif se trouve sous un autre dispositif similaire (par exemple le dispositif HW3-1 sur la figure 48). Ces deux cas sont considérés comme similaires car la plaque conductrice 105 forme un écran qui rend l'antenne insensible à ce qui est au-dessus d'elle ;
- FT1b (Fig. 47) est la fréquence d'accord de l'antenne à fente fermée lorsque le dispositif se trouve posé sur une surface métallique ou posé sur un autre dispositif similaire (par exemple le dispositif HW3 sur la figure 48) ;
- FT2a (Fig. 46) est la fréquence d'accord de l'antenne parasite à fente ouverte lorsque le dispositif est à l'air libre ou lorsque le dispositif se trouve sous un autre dispositif similaire (par exemple le dispositif HW3-1 sur la figure 48). En effet dans les deux cas la plaque conductrice 105 forme un écran qui bloque le rayonnement que l'antenne parasite émet vers le haut le long de l'axe X, et la présence de masses métalliques au-dessus du dispositif ne modifie pas ses propriétés ;
- FT2b (Fig. 47) est la fréquence d'accord de l'antenne parasite à fente ouverte lorsque le dispositif se trouve posé sur une surface métallique ou posé sur un autre dispositif similaire (par exemple le dispositif HW3 sur la figure 48). Dans ce cas la plaque conductrice 105 bloque le rayonnement émis vers le bas par l'antenne parasite, le long de l'axe X.

Les résultats suivants sont obtenus, les fréquences d'accord de l'antenne à fente fermée et de l'antenne parasite à fente ouverte étant celles pour lesquelles les pertes par réflexion les plus faibles sont obtenues :
Figure 46 (air libre) :
   - FT1a = 2,32 GHz soit FT1a<Fmin
   - FT2a = 2,42 GHz soit Fmin<FT2a<Fmax
Figure 47 (posé sur une surface métallique ou un autre dispositif) :
   - FT1b = 2,475 GHz, soit Fmin<FT1b<Fmax
   - FT2b = 3,15 GHz soit Fmax<<FT2b
Avec (pour mémoire) :
   - Fmin = 2,4 GHz
   - Fmax = 2,483 GHz

Dans le cas de la figure 46, la fréquence d'accord FT1a de l'antenne à fente fermée est «hors bande» tandis que la fréquence d'accord FT2a de l'antenne parasite à fente ouverte est dans la bande de fréquences visée. Le rayonnement de l'antenne parasite à fente ouverte est prédominant sur celui de l'antenne à fente fermée.

Dans le cas de la figure 47, la fréquence d'accord FT1b de l'antenne à fente fermée est dans la bande de fréquences visée tandis que la fréquence d'accord FT2b de l'antenne parasite à fente ouverte est hors bande. On voit en effet sur la figure 48 que l'antenne parasite à fente ouverte voit deux écrans électromagnétiques au-dessus et au-dessous d'elle, le long de son axe X de rayonnement. L'écran au-dessus est formé par la paroi 105 du châssis dans lequel elle se trouve, et l'écran au-dessous est formé par la paroi 105 du châssis du dispositif HW3-1. Le rayonnement de l'antenne à fente fermée est donc dans ce cas prédominant sur celui de l'antenne parasite à fente ouverte.

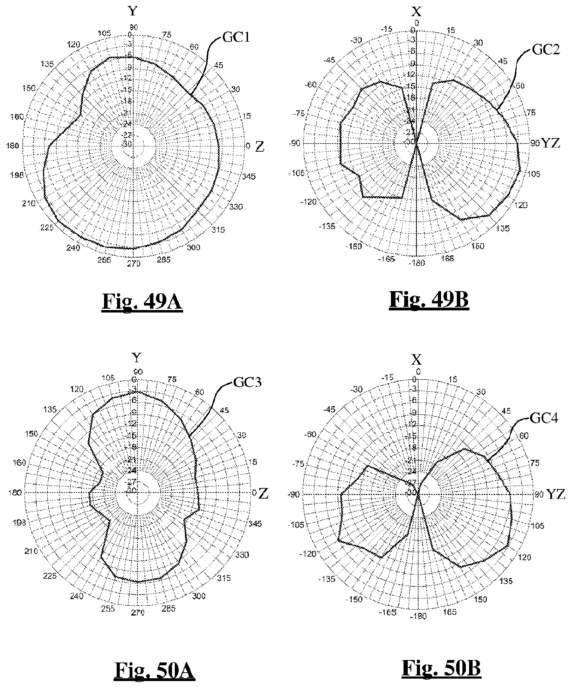

Enfin, les figures 49A et 49B montrent le gain CG1, CG2 de l'antenne résultante lorsque le dispositif HW3 est à l'air libre, et les figures 50A, 50B montrent le gain CG3, CG4 de l'antenne résultante lorsque le dispositif HW3 est posé sur une surface métallique ou sur un dispositif similaire HW3-1. Plus particulièrement, les figures 49A, 50A montrent le gain CG1, CG3 de l'antenne résultante dans le plan Y-Z, soit le plan du châssis ou plan horizontal lorsque le châssis est posé à plat. Les figures 49B, 50B montrent le gain CG2, CG4 de l'antenne résultante dans le plan vertical X-YZ, soit un plan perpendiculaire au châssis ou plan vertical lorsque le châssis est posé à plat. On obtient, dans le premier cas, un pic de gain de -1,5 dB selon un angle horizontal de 225 degrés et un angle vertical de 105 degrés. On obtient, dans le deuxième cas, un pic de gain de -3,4 dB selon un angle horizontal de 90 degrés et un angle vertical de 120 degrés.

Ainsi :
1) le gain de l'antenne résultante dans la bande de fréquences visée est supérieur à -5 dB lorsque le châssis du dispositif est à l'air libre et reste supérieur à -5 dB lorsque la face arrière du châssis du dispositif HW3 est en regard d'une surface électriquement conductrice, notamment la plaque 105 du châssis d'un dispositif similaire HW3-1, HW3-2,
2) lorsque le châssis 10 est à l'air libre, l'antenne parasite à fente ouverte présente une fréquence d'accord située dans la bande de fréquences visée tandis que l'antenne à fente fermée présente une fréquence d'accord située en dehors de la bande de fréquences visée, et
3) lorsque la face arrière du châssis est en regard d'une surface métallique et notamment la plaque avant 105 du châssis d'un dispositif similaire, l'antenne à fente fermée présente une fréquence d'accord située dans la bande de fréquences visée tandis que l'antenne parasite à fente ouverte présente une fréquence d'accord située en dehors de la bande de fréquences visée.

En d'autres termes, lorsque l'antenne résultante se trouve entre deux plaques conductrices, elle rayonne principalement par le côté du châssis, tandis que lorsque le châssis est à l'air libre, l'antenne résultante rayonne majoritairement par le dessous du châssis, qui est recouvert d'un capot en matière plastique.

Il apparaîtra clairement à l'homme de l'art que le perfectionnement qui vient d'être décrit est susceptible de nombreuses variantes et n'est pas limité au contexte applicatif dans le cadre duquel il a été conçu. De façon générale, la combinaison d'une antenne à fente fermée et d'une antenne parasite à fente ouverte qui vient d'être décrite n'est pas liée à la structure du châssis 10 qui a été décrit dans ce qui précède et son application n'est pas seulement réservée à un portefeuille matériel. Une telle combinaison peut être utilisée dans diverses applications et divers dispositifs électroniques portatifs, notamment mais non exclusivement lorsque les conditions d'utilisation sont telles que l'environnement métallique de l'antenne peut varier dans de larges proportions.

Il apparaîtra également clairement à l'homme de l'art que les deuxième, troisième, quatrième et cinquième perfectionnements, bien qu'ayant été décrits dans ce qui précède en relation avec la réalisation d'un portefeuille matériel pour le stockage de clés privées, sont indépendants les uns des autres et peuvent faire l'objet de mises en œuvre distinctes et de diverses applications autres qu'une application à un portefeuille matériel.

## Revendications

1. Dispositif électronique (HW3) comprenant :
- un châssis (10) en un matériau électriquement conducteur, comprenant une face avant (FS), une face arrière (RS) et une paroi latérale (102),
- une antenne à fente fermée (40, 50, 102) prévue pour émettre ou recevoir des données dans une bande de fréquences déterminée, pratiquée dans la paroi latérale (102) du châssis et ayant un axe de rayonnement (Y) sensiblement perpendiculaire à la paroi latérale (102), et
- un circuit de communication sans fil (MCU3) configuré pour fournir un signal radiofréquence (RFS) à l'antenne radiofréquence, l'antenne à fente fermée comprenant un orifice longitudinal (40) pratiqué dans la paroi latérale (102) du châssis (10) et traversant celle-ci,
le dispositif comprend en outre un injecteur (50) de signal radiofréquence (RFS) pour appliquer à une première surface (41) de l'orifice longitudinal (40) un potentiel de masse et appliquer le signal radiofréquence (RFS) à une deuxième surface (42) de l'orifice longitudinal (40), l'injecteur de signal comportant :
- deux électrodes (51, 52) plates sensiblement parallèles, la première électrode (51) étant en appui sur la première surface (41) de l'orifice longitudinal (40) et la deuxième électrode (52) en appui sur la deuxième surface (42) de l'orifice longitudinal (40), et
- une pièce de compression (55) en un matériau souple et élastique, agencée entre les deux électrodes (51, 52) et exerçant sur celles-ci une force d'écartement qui plaque la première électrode (51) contre la première surface (41) de l'orifice longitudinal (40) et plaque la deuxième électrode (52) contre la deuxième surface (42) de l'orifice longitudinal (40).

2. Dispositif selon la revendication 1, dans lequel les deux électrodes plates (51, 52) ont une surface de contact avec les première et deuxième surfaces (41, 42) de l'orifice longitudinal qui est fonction de leur longueur, et présentent chacune une longueur qui est au moins égale au quart de la longueur desdites surfaces.

3. Dispositif selon l'une des revendications 1 et 2, dans lequel l'injecteur (50) de signal radiofréquence (RFS) comprend des conducteurs électriques (500) et des composants électroniques (C1, C2, C3) reliant les première et deuxième électrodes (51, 52).

4. Dispositif selon l'une des revendications 1 à 3, dans lequel la longueur (Ls) de l'orifice longitudinal (40) est proche du quart de la longueur d'onde d'un signal radiofréquence (RFS) de fréquence 2,4 GHz, soit 30,6 mm pour tenir compte de la présence de l'antenne parasite à fente ouverte.

5. Dispositif selon l'une des revendications 1 à 4, comprenant également une antenne parasite à fente ouverte (70, 102) ayant un axe de rayonnement (X) sensiblement perpendiculaire à l'axe de rayonnement (Y) de l'antenne à fente fermée, l'antenne parasite à fente ouverte comprenant un bras électriquement conducteur (70) agencé parallèlement à l'orifice longitudinal (40) et à proximité de celui-ci, le bras électriquement conducteur (70) ayant une extrémité libre (701) et une extrémité (702) connectée électriquement à la paroi latérale (102) du châssis.

6. Dispositif selon la revendication 5, dans lequel l'extrémité connectée (702) du bras (70) est connectée électriquement à la paroi latérale (102) du châssis à proximité d'une extrémité (44) de la deuxième surface (42) de l'orifice longitudinal (40) recevant le signal radiofréquence (RFS).

7. Dispositif selon l'une des revendications 5 et 6, dans lequel une longueur (Ls) et une hauteur (Hs) de l'orifice longitudinal (40), une longueur (Lb) du bras électriquement conducteur (70) et une distance orthogonale (Db) entre le bras électriquement conducteur et la paroi latérale (102) du châssis (10), sont des paramètres de configuration de l'antenne à fente fermée et de l'antenne parasite à fente ouverte, et dans lequel l'antenne à fente fermée et l'antenne parasite à fente ouverte forment une antenne résultante dont le gain dans la bande de fréquence déterminée est supérieur à -5 dB lorsque le châssis (10) du dispositif est à l'air libre et reste supérieur à -5 dB lorsque la face arrière (RS) du châssis (10) est en regard d'une surface électriquement conductrice (105).

8. Dispositif selon l'une des revendications 5 à 7, dans lequel l'antenne à fente fermée et l'antenne à parasite fente ouverte sont configurées de manière que lorsque la face arrière (RS) du châssis (10) est en regard d'une surface électriquement conductrice (105), le rayonnement de l'antenne à fente fermée est prédominant sur le rayonnement de l'antenne parasite à fente ouverte.

9. Dispositif selon l'une des revendications 5 à 8, dans lequel le bras électriquement conducteur (70) comporte, dans le prolongement de son extrémité (70a) connectée électriquement à la paroi latérale (102) du châssis (10), une base (703) fixée à la paroi latérale (108, 102) du châssis, et un contact en saillie (71) venant en appui sur une surface de contact (108) prévue dans la paroi latérale (102) du châssis (10).

10. Dispositif selon la revendication 9, dans lequel le bras électriquement conducteur (70) est monté sous contrainte en flexion élastique entre sa base (703) fixée à la paroi latérale (108, 102) du châssis et le contact en saillie (71) en appui sur la surface de contact (107) prévue dans la paroi latérale (102) du châssis, la contrainte en flexion élastique exerçant une pression sur le contact en saillie (71) en appui sur la surface de contact (107).

11. Dispositif selon l'une des revendications 5 à 10, dans lequel le bras électriquement conducteur (70) est agencé dans une pièce de guidage (80) en matière plastique assurant le parallélisme du bras relativement à la paroi latérale (102) du châssis (10).

12. Dispositif selon l'une des revendications 5 à 11, dans lequel le châssis (10) comporte sur sa face avant (FS) une plaque électriquement conductrice (105) formant un premier écran au rayonnement émis par l'antenne parasite à fente ouverte, et dans lequel l'antenne à fente fermée et l'antenne à parasite fente ouverte sont configurées de manière que :
- lorsque le châssis (10) est à l'air libre, l'antenne parasite à fente ouverte présente une fréquence d'accord située dans la bande de fréquences déterminée tandis que l'antenne à fente fermée présente une fréquence d'accord située en dehors de la bande de fréquences déterminée, et
- lorsque la face arrière (RS) du châssis (10) est en regard de la face avant d'un dispositif similaire (HW3-1, HW3-2) ou d'une surface électriquement conductrice formant un deuxième écran au rayonnement émis par l'antenne parasite à fente ouverte, l'antenne à fente fermée présente une fréquence d'accord située dans la bande de fréquences déterminée tandis que l'antenne parasite à fente ouverte présente une fréquence d'accord située en dehors de la bande de fréquences déterminée.

13. Dispositif selon l'une des revendications 1 à 12, formant un portefeuille matériel pour le stockage à froid de clés de cryptographie issues de la blockchain et comprenant un microcontrôleur (MCU3) et un élément sécurisé (SE3).

14. Dispositif selon l'une des revendications 1 à 13, dans lequel le châssis (10) est en un matériau non magnétique électriquement conducteur et comporte des aimants (Mi, M1, M2, M3a, M3b, M4a, M4b) pour empiler magnétiquement le dispositif avec un dispositif similaire (HW3-1, HW3-2).

15. Dispositif selon l'une des revendications 1 à 14, dans lequel la bande de fréquences déterminée est la bande Bluetooth ou une bande Wifi.

## Patentansprüche

1. Elektronische Vorrichtung (HW3), umfassend:
- ein Gehäuse (10) aus einem elektrisch leitfähigen Material, umfassend eine Vorderseite (FS), eine Rückseite (RS) und eine Seitenwand (102),
- eine geschlossene Schlitzantenne (40, 50, 102), die zum Aussenden oder Empfangen von Daten in einem bestimmten Frequenzband vorgesehen ist, in der Seitenwand (102) des Gehäuses ausgebildet ist und eine Strahlungsachse (Y) besitzt, die im Wesentlichen senkrecht zu der Seitenwand (102) verläuft, und
- eine Drahtloskommunikationsschaltung (MCU3), die zum Bereitstellen eines Hochfrequenzsignals (RFS) an die Hochfrequenzantenne konfiguriert ist,
wobei die geschlossene Schlitzantenne eine Längsöffnung (40), die in der Seitenwand (102) des Gehäuses (10) ausgebildet ist und diese durchdringt, umfasst,
die Vorrichtung umfasst ferner einen Injektor (50) für ein Hochfrequenzsignal (RFS), um an eine erste Oberfläche (41) der Längsöffnung (40) ein Massepotenzial anzulegen und das Hochfrequenzsignal (RFS) an eine zweite Oberfläche (42) der Längsöffnung (40) anzulegen, wobei der Signalinjektor vorweist:
- zwei flache, im Wesentlichen parallele Elektroden (51, 52), wobei die erste Elektrode (51) an der ersten Oberfläche (41) der Längsöffnung (40) anliegt und die zweite Elektrode (52) an der zweiten Oberfläche (42) der Längsöffnung (40) anliegt, und
- ein Druckstück (55) aus einem flexiblen und elastischen Material, das zwischen den zwei Elektroden (51, 52) angeordnet ist und auf diese eine Spreizkraft ausübt, die die erste Elektrode (51) gegen die erste Oberfläche (41) der Längsöffnung (40) drückt und die zweite Elektrode (52) gegen die zweite Oberfläche (42) der Längsöffnung (40) drückt.

2. Vorrichtung nach Anspruch 1, wobei die zwei flachen Elektroden (51, 52) eine Kontaktoberfläche mit der ersten und zweiten Oberfläche (41, 42) der Längsöffnung besitzen, die von deren Länge abhängt, und jeweils eine Länge besitzen, die mindestens gleich dem Viertel der Länge der Oberflächen ist.

3. Vorrichtung nach einem der Ansprüche 1 und 2, wobei der Injektor (50) für ein Hochfrequenzsignal (RFS) elektrische Leiter (500) und elektronische Bauteile (C1, C2, C3) umfasst, die die erste und die zweite Elektrode (51, 52) aneinander anschließen.

4. Vorrichtung nach einem der Ansprüche 1 bis 3, wobei die Länge (Ls) der Längsöffnung (40) nahe dem Viertel der Wellenlänge eines Hochfrequenzsignals (RFS) mit einer Frequenz von 2,4 GHz, d. h. 30,6 mm, zum Berücksichtigen des Vorhandenseins der parasitären offenen Schlitzantenne liegt.

5. Vorrichtung nach einem der Ansprüche 1 bis 4, ferner umfassend eine parasitäre offene Schlitzantenne (70, 102), die eine Strahlungsachse (X) besitzt, die im Wesentlichen senkrecht zu der Strahlungsachse (Y) der geschlossenen Schlitzantenne verläuft, wobei die parasitäre offene Schlitzantenne einen elektrisch leitfähigen Arm (70) umfasst, der parallel zu der Längsöffnung (40) und in deren Nähe angeordnet ist, wobei der elektrisch leitfähige Arm (70) ein freies Ende (701) und ein Ende (702) besitzt, das mit der Seitenwand (102) des Gehäuses elektrisch verbunden ist.

6. Vorrichtung nach Anspruch 5, wobei das verbundene Ende (702) des Arms (70) in der Nähe eines Endes (44) der zweiten Oberfläche (42) der Längsöffnung (40), die das Hochfrequenzsignal (RFS) empfängt, mit der Seitenwand (102) des Gehäuses elektrisch verbunden ist.

7. Vorrichtung nach einem der Ansprüche 5 und 6, wobei eine Länge (Ls) und eine Höhe (Hs) der Längsöffnung (40), eine Länge (Lb) des elektrisch leitfähigen Arms (70) und ein orthogonaler Abstand (Db) zwischen dem elektrisch leitfähigen Arm und der Seitenwand (102) des Gehäuses (10) Konfigurationsparameter der geschlossenen Schlitzantenne und der parasitären offenen Schlitzantenne sind, und wobei die geschlossene Schlitzantenne und die parasitäre offene Schlitzantenne eine resultierende Antenne ausbilden, deren Verstärkung in dem bestimmten Frequenzband größer als -5 dB ist, wenn sich das Gehäuse (10) der Vorrichtung im Freien befindet, und größer als -5 dB bleibt, wenn die Rückseite (RS) des Gehäuses (10) einer elektrisch leitfähigen Oberfläche (105) zugewandt ist.

8. Vorrichtung nach einem der Ansprüche 5 bis 7, wobei die geschlossene Schlitzantenne und die parasitäre offene Schlitzantenne derart konfiguriert sind, dass, wenn die Rückseite (RS) des Gehäuses (10) einer elektrisch leitfähigen Oberfläche (105) zugewandt ist, die Strahlung der geschlossenen Schlitzantenne gegenüber der Strahlung der parasitären offenen Schlitzantenne überwiegt.

9. Vorrichtung nach einem der Ansprüche 5 bis 8, wobei der elektrisch leitfähige Arm (70) in der Verlängerung seines Endes (70a), das mit der Seitenwand (102) des Gehäuses (10) elektrisch verbunden ist, eine Basis (703), die an der Seitenwand (108, 102) des Gehäuses befestigt ist, und einen hervorstehenden Kontakt (71) vorweist, der an einer Kontaktoberfläche (108) anliegt, die in der Seitenwand (102) des Gehäuses (10) vorgesehen ist.

10. Vorrichtung nach Anspruch 9, wobei der elektrisch leitfähige Arm (70) unter elastischer Biegespannung zwischen seiner Basis (703), die an der Seitenwand (108, 102) des Gehäuses befestigt ist, und dem hervorstehenden Kontakt (71) montiert ist, der an der Kontaktoberfläche (107) anliegt, die in der Seitenwand (102) des Gehäuses vorgesehen ist, wobei die elastische Biegespannung einen Druck auf den hervorstehenden Kontakt (71) ausübt, der an der Kontaktoberfläche (107) anliegt.

11. Vorrichtung nach einem der Ansprüche 5 bis 10, wobei der elektrisch leitfähige Arm (70) in einem Führungsteil (80) aus Kunststoff angeordnet ist, das die Parallelität des Arms relativ zu der Seitenwand (102) des Gehäuses (10) gewährleistet.

12. Vorrichtung nach einem der Ansprüche 5 bis 11, wobei das Gehäuse (10) auf seiner Vorderseite (FS) eine elektrisch leitfähige Platte (105) vorweist, die eine erste Abschirmung gegen die von der parasitären offenen Schlitzantenne ausgesendete Strahlung ausbildet, und wobei die geschlossene Schlitzantenne und die parasitäre offene Schlitzantenne derart konfiguriert sind, dass:
- wenn das Gehäuse (10) im Freien ist, die parasitäre offene Schlitzantenne eine Abstimmfrequenz aufweist, die in dem bestimmten Frequenzband liegt, während die geschlossene Schlitzantenne eine Abstimmfrequenz aufweist, die außerhalb des bestimmten Frequenzbandes liegt, und
- wenn die Rückseite (RS) des Gehäuses (10) der Vorderseite einer ähnlichen Vorrichtung (HW3-1, HW3-2) oder einer elektrisch leitfähigen Oberfläche zugewandt ist, die eine zweite Abschirmung gegen die durch die parasitäre offene Schlitzantenne ausgesendete Strahlung ausbildet, die geschlossene Schlitzantenne eine Abstimmfrequenz aufweist, die in dem bestimmten Frequenzband liegt, während die parasitäre offene Schlitzantenne eine Abstimmfrequenz aufweist, die außerhalb des bestimmten Frequenzbandes liegt.

13. Vorrichtung nach einem der Ansprüche 1 bis 12, die ein Hardware-Wallet für die kalte Speicherung von kryptografischen Schlüsseln aus der Blockchain ausbildet und einen Mikrocontroller (MCU3) und ein sicheres Element (SE3) umfasst.

14. Vorrichtung nach einem der Ansprüche 1 bis 13, wobei das Gehäuse (10) aus einem nichtmagnetischen, elektrisch leitfähigen Material besteht und Magnete (Mi, M1, M2, M3a, M3b, M4a, M4b) zum magnetischen Stapeln der Vorrichtung mit einer ähnlichen Vorrichtung (HW3-1, HW3-2) vorweist.

15. Vorrichtung nach einem der Ansprüche 1 und 14, wobei das bestimmte Frequenzband das Bluetooth-Band oder ein WLAN-Band ist.

## Claims

1. An electronic device (HW3) comprising:
- a chassis (10) of an electrically conductive material, comprising a front side (FS), a rear side (RS) and a side wall (102),
- a closed-slot antenna (40, 50, 102) for transmitting or receiving data in a specified frequency band, made in the side wall (102) of the chassis and having a radiation axis (Y) substantially perpendicular to the side wall (102), and
- a wireless communication circuit (MCU3) configured to provide a radio frequency signal (RFS) to the radio frequency antenna,
the closed-slot antenna comprising a longitudinal port (40) in and through the side wall (102) of the chassis (10),
the device further comprising a radio frequency signal injector (50) for applying a ground voltage to a first surface (41) of the longitudinal port (40) and applying the radio frequency signal (RFS) to a second surface (42) of the longitudinal port (40), the signal injector comprising:
- two flat electrodes (51, 52) substantially parallel to each other, the first electrode (51) resting on the first surface (41) of the longitudinal port (40) and the second electrode (52) resting on the second surface (42) of the longitudinal port (40), and
- a compression element (55) of a flexible and elastic material, arranged between the two electrodes (51, 52) and exerting on them a spreading force which presses the first electrode (51) against the first surface (41) of the longitudinal port (40) and presses the second electrode (52) against the second surface (42) of the longitudinal port (40).

2. The device according to claim 1, wherein the two flat electrodes (51, 52) have a contact surface with the first and second surfaces (41, 42) of the longitudinal port which is a function of their length, and each having a length which is at least equal to one quarter of the length of said surfaces.

3. The device according to one of claims 1 and 2, wherein the radio frequency signal injector (50) comprises electrical conductors (500) and electronic components (C1, C2, C3) connecting the first and second electrodes (51, 52).

4. The device according to any one of claims 1 to 3, wherein the length (Ls) of the longitudinal port (40) is close to one-quarter of the wavelength of a radio frequency signal (RFS) of frequency 2.4 GHz, i.e., 30.6 mm, to account for the presence of an open-slot parasitic antenna.

5. The device according to any one of claims 1 to 4, also comprising an open-slot parasitic antenna (70, 102) having a radiation axis (X) substantially perpendicular to the radiation axis (Y) of the closed-slot antenna, the open-slot parasitic antenna comprising an electrically conductive arm (70) arranged parallel to and in the vicinity of the longitudinal port (40), the electrically conductive arm (70) having a free end (701) and an end (702) electrically connected to the side wall (102) of the chassis.

6. The device according to claim 5, wherein the connected end (702) of the arm (70) is electrically connected to the side wall (102) of the chassis in the vicinity of one end (44) of the second surface (42) of the longitudinal port (40) receiving the radio frequency signal (RFS).

7. The device according to one of claims 5 and 6, wherein a length (Ls) and a height (Hs) of the longitudinal port (40), a length (Lb) of the electrically conductive arm (70) and an orthogonal distance (Db) between the electrically conductive arm and the side wall (102) of the chassis (10) are configuration parameters of the closed-slot antenna and the open-slot parasitic antenna, and wherein the closed-slot antenna and the open-slot parasitic antenna form a resulting antenna whose gain in the specified frequency band is greater than -5 dB when the chassis (10) of the device is in open air and remains greater than -5 dB when the rear side (RS) of the chassis (10) faces an electrically conductive surface (105).

8. The device according to any one of claims 5 to 7, wherein the closed-slot antenna and the open-slot parasitic antenna are configured so that when the rear side (RS) of the chassis (10) faces an electrically conductive surface (105), the radiation from the closed-slot antenna is predominant over the radiation from the open-slot parasitic antenna.

9. The device according to one of claims 5 to 8, wherein the electrically conductive arm (70) comprises, as an extension of its end (70a) electrically connected to the side wall (102) of the chassis (10), a base (703) attached to the side wall (108, 102) of the chassis, and a projecting contact (71) resting on a contact surface (108) provided in the side wall (102) of the chassis (10).

10. The device according to claim 9, wherein the electrically conductive arm (70) is mounted under elastic flexion between its base (703) attached to the side wall (108, 102) of the chassis and the projecting contact (71) resting on the contact surface (107) provided in the side wall (102) of the chassis, the elastic flexion exerting pressure on the projecting contact (71) resting on the contact surface (107).

11. The device according to one of claims 5 to 10, wherein the electrically conductive arm (70) is arranged in a guide member (80) of plastic material ensuring parallelism of the arm with respect to the side wall (102) of the chassis (10).

12. The device according to any one of claims 5 to 11, wherein the chassis (10) has on its front side (FS) an electrically conductive plate (105) forming a first screen to the radiation emitted by the open-slot parasitic antenna, and wherein the closed-slot antenna and the open-slot parasitic antenna are configured so that:
- when the chassis (10) is in open air, the open-slot parasitic antenna has a tuning frequency within the specified frequency band while the closed-slot antenna has a tuning frequency outside the specified frequency band, and
- when the rear side (RS) of the chassis (10) faces the front side of a similar device (HW3-1, HW3-2) or an electrically conductive surface forming a second screen to the radiation emitted by the open-slot parasitic antenna, the closed-slot antenna has a tuning frequency within the specified frequency band while the open-slot parasitic antenna has a tuning frequency outside the specified frequency band.

13. The device according to one of claims 1 to 12, forming a hardware wallet for the cold storage of cryptographic keys from the blockchain and comprising a microcontroller (MCU3) and a secure element (SE3).

14. The device according to any one of claims 1 to 13, wherein the chassis (10) is made of an electrically conductive non-magnetic material and has magnets (Mi, M1, M2, M3a, M3b, M4a, M4b) for magnetically stacking the device with a similar device (HW3-1, HW3-2).

15. The device according to any one of claims 1 to 14, wherein the specified frequency band is the Bluetooth band or a Wi-Fi band.
